(19) Europäisches Patentamt
European Patent Office
Office européen des brevets

(11) **EP 4 657 017 A1**

(12) **EUROPEAN PATENT APPLICATION**

(43) Date of publication:
**03.12.2025 Bulletin 2025/49**

(51) International Patent Classification (IPC):
***G01B 15/02*** *(2006.01)*

(21) Application number: **25178815.4**

(52) Cooperative Patent Classification (CPC):
**G01B 15/025**

(22) Date of filing: **26.05.2025**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **29.05.2024 JP 2024087272**

(71) Applicant: **Yokogawa Electric Corporation**
**Tokyo 180-8750 (JP)**

(72) Inventors:
• **TSUDA, Yasuyuki**
**Musashino-shi**
**Tokyo, 180-8750 (JP)**

• **MIYAZAWA, Kazunori**
**Musashino-shi**
**Tokyo, 180-8750 (JP)**
• **NISHIDA, Kazufumi**
**Musashino-shi**
**Tokyo, 180-8750 (JP)**
• **HIGASHI, Kohei**
**Musashino-shi**
**Tokyo, 180-8750 (JP)**

(74) Representative: **Winter, Brandl - Partnerschaft mbB**
**Alois-Steinecker-Straße 22**
**85354 Freising (DE)**

(54) **MEASUREMENT APPARATUS, MEASUREMENT METHOD, AND MEASUREMENT PROGRAM**

(57) A measurement device (10) collects, from a detection device (20), a detection profile including a plurality of detection values related to a thickness or a basis weight of an electrode sheet (S) that is to be conveyed, performs smoothing, by using a smoothing filter, on the plurality of detection values included in the detection profile in a CD direction that is perpendicular to a MD direction of the electrode sheet S, and outputs a first smoothing profile.

FIG.1

**Description**

FIELD

The present invention relates to a measurement apparatus, a measurement method, and a measurement program.

BACKGROUND

A battery electrode sheet (hereinafter, appropriately referred to as an "electrode sheet") is a sheet obtained by thinly coating a mixture, such as an active material, on a metal foil, and drying the obtained electrode sheet. In a process of manufacturing the electrode sheet, a positive electrode slurry (liquid mixture) and a negative electrode slurry (liquid mixture) are applied to the surface of an aluminum foil and a copper foil, respectively. In a coating schedule described above, in a case where a coating amount of the slurry is measured, a detection device calculates each of a thickness, a basis weight, and the like of the sheet before and after a coating process is performed, and the coating amount is obtained from the difference therebetween. At this time, there is a need to perform smoothing on data because noise caused by the characteristic of a sensor or the like is included in the thickness or the basis weight measured by the detection device (see, for example, Japanese Laid-open Patent Publication No. 2022-048808).

However, it is difficult to improve measurement accuracy of the thickness or the basis weight. For example, in smoothing performed on data using a conventional technology, values that indicate a variation in data, such as a standard deviation $\sigma$ or a range R (a difference between the maximum value and the minimum value), do not decrease until a sufficient amount of data is accumulated.

Accordingly, the present invention has been conceived in light of the circumstances described above and an object thereof is to provide a measurement apparatus, a measurement method, and a measurement program capable of improving measurement accuracy of a thickness or a basis weight.

SUMMARY

According to an aspect of the embodiments, a measurement apparatus includes a collection unit that collects, from a detection device, a detection profile including a plurality of detection values related to a thickness or a basis weight of a measurement object that is to be conveyed and that is in a form of a sheet, and a first smoothing unit that performs smoothing, by using a predetermined filter, on the plurality of detection values included in the detection profile in a width direction that is perpendicular to a conveyance direction of the measurement object, and that outputs a first smoothing profile.

According to an aspect of the embodiments, a measurement method that causes a computer to execute a process includes collecting, from a detection device, a detection profile including a plurality of detection values related to a thickness or a basis weight of a measurement object that is to be conveyed and that is in a form of a sheet, and performing smoothing, by using a predetermined filter, on the plurality of detection values included in the detection profile in a width direction that is perpendicular to a conveyance direction of the measurement object, and outputting a first smoothing profile.

According to an aspect of the embodiments, a measurement program that causes a computer to execute a process includes collecting, from a detection device, a detection profile including a plurality of detection values related to a thickness or a basis weight of a measurement object that is to be conveyed and that is in a form of a sheet, and performing smoothing, by using a predetermined filter, on the plurality of detection values included in the detection profile in a width direction that is perpendicular to a conveyance direction of the measurement object, and outputting a first smoothing profile.

BRIEF DESCRIPTION OF THE DRAWINGS

FIG. 1 is a diagram illustrating a configuration example and a process example related to a coating amount measurement system according to an embodiment;
FIG. 2 is a diagram illustrating a specific example of a detection device included in the coating amount measurement system according to the embodiment;
FIG. 3 is a diagram illustrating a specific example of a coating line provided in the coating amount measurement system according to the embodiment;
FIG. 4 is a diagram illustrating a specific example of a detection result obtained by the detection device included in the coating amount measurement system according to the embodiment;

FIG. 5 is a diagram illustrating a specific example of a detection position of a detection device included in the coating amount measurement system according to the embodiment;

FIG. 6 is a block diagram illustrating a configuration example of each device included in the coating amount measurement system according to the embodiment;

FIG. 7 is a diagram illustrating one example of a detection result storage unit included in a measurement apparatus according to the embodiment;

FIG. 8 is a diagram illustrating one example of a first smoothing result storage unit included in the measurement apparatus according to the embodiment;

FIG. 9 is a diagram illustrating one example of a second smoothing result storage unit included in the measurement apparatus according to the embodiment;

FIG. 10 is a diagram illustrating a first specific example of each process performed in the coating amount measurement system according to the embodiment;

FIG. 11 is a diagram illustrating a second specific example of each of the processes performed in the coating amount measurement system according to the embodiment;

FIG. 12 is a diagram illustrating a third specific example of each of the processes performed in the coating amount measurement system according to the embodiment;

FIG. 13 is a diagram illustrating a fourth specific example of each of the processes performed in the coating amount measurement system according to the embodiment;

FIG. 14 is a diagram illustrating a fifth specific example of each of the processes performed in the coating amount measurement system according to the embodiment;

FIG. 15 is a diagram illustrating a sixth specific example of each of the processes performed in the coating amount measurement system according to the embodiment;

FIG. 16 is a diagram illustrating a seventh specific example of each of the processes performed in the coating amount measurement system according to the embodiment;

FIG. 17 is a diagram illustrating an eighth specific example of each of the processes performed in the coating amount measurement system according to the embodiment;

FIG. 18 is a diagram illustrating a ninth specific example of each of the processes performed in the coating amount measurement system according to the embodiment;

FIG. 19 is a diagram illustrating a tenth specific example of each of the processes performed in the coating amount measurement system according to the embodiment;

FIG. 20 is a flowchart illustrating one example of the overall flow of the process performed in the coating amount measurement system according to the embodiment;

FIG. 21 is a flowchart illustrating one example of the flow of a detection result management process performed in the coating amount measurement system according to the embodiment;

FIG. 22 is a flowchart illustrating one example of the flow of a first smoothing result management process performed in the coating amount measurement system according to the embodiment;

FIG. 23 is a flowchart illustrating one example of the flow of a second smoothing result management process performed in the coating amount measurement system according to the embodiment; and

FIG. 24 is a diagram illustrating an example of a hardware configuration according to the embodiment.

DETAILED DESCRIPTION OF THE PREFERRED EMBODIMENTS

Preferred embodiments of a measurement apparatus, a measurement method, and a measurement program according to one embodiment of the present invention will be explained in detail below with reference to the accompanying drawings. Furthermore, the present invention is not limited to the embodiments described below.

In the following, a configuration and a process related to a coating amount measurement system 100 according to the embodiment, a configuration and a process related to each device included in the coating amount measurement system 100, the flow of each process performed in the coating amount measurement system 100, and effects of the embodiment will be described.

1. Configuration and process related to coating amount measurement system 100

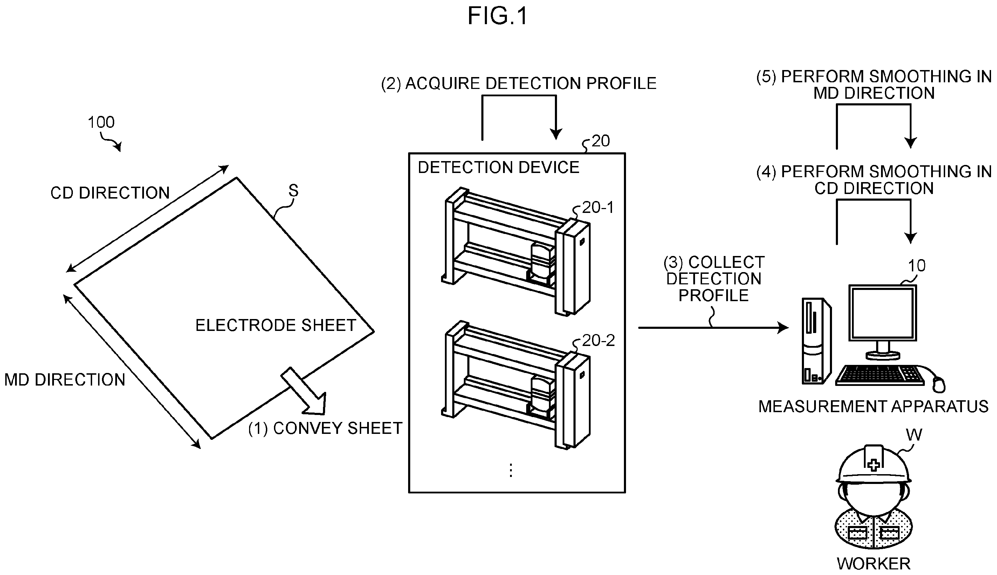

A configuration and a process related to the coating amount measurement system 100 according to the embodiment will be described with reference to FIG. 1 to FIG. 5. In the following, an example of the overall configuration of the coating amount measurement system 100, the basic principle of the coating amount measurement system 100, an example of the process performed in the coating amount measurement system 100, and the effect of the coating amount measurement system 100 will be described. Moreover, in the embodiment, a description will be given by using a measurement apparatus 10 that measures a thickness and a basis weight of an electrode sheet S online will be used as one example, but the example is not intended to limit a measurement target and fields of application.

1-1. Example of overall configuration of coating amount measurement system 100

In the following, an example of the overall configuration of the coating amount measurement system 100 will be described with reference to FIG. 1. FIG. 1 is a diagram illustrating a configuration example and a process example related to the coating amount measurement system 100 according to the embodiment. The coating amount measurement system 100 includes the measurement apparatus 10 and a detection device 20. FIG. 1 is a diagram illustrating a configuration example and a process example related to the coating amount measurement system 100 according to the embodiment. Here, the measurement apparatus 10 and the detection device 20 are communicably connected one another via a predetermined communication network (not illustrated) in a wired or wireless manner. Moreover, various kinds of communication networks, such as the Internet or a dedicated line, may be used for the predetermined communication network. Furthermore, the coating amount measurement system 100 may also include a conveyance device (not illustrated), such as a coating device CM (not illustrated), a drying device DM (not illustrated), and a roller, that will be described later. Furthermore, the measurement apparatus 10, the coating device (not illustrated), the drying device (not illustrated), and the conveyance device (not illustrated) are communicably connected one another by using an analog signal, a pulse signal, Ethernet (registered trademark), or the like.

1-1-1. Measurement device 10

The measurement apparatus 10 is a device that is used by a worker W who manages a coating line of the electrode sheet S, and that measures a coating amount of the electrode sheet S that is a measurement object. For example, the measurement apparatus 10 is installed in an operator room, or the like that manages the coating line of the electrode sheet S. Moreover, two or more of the measurement apparatuses 10 may also be included in the coating amount measurement system 100 illustrated in FIG. 1. Furthermore, in the example illustrated in FIG. 1, a case in which the measurement apparatus 10 is implemented by a desktop personal computer (PC) is illustrated, but the measurement apparatus 10 may also be implemented by a notebook personal computer (PC), a smartphone, a server device, a cloud system, or the like.

1-1-2. Detection device 20

The detection device 20 (20-1, 20-2, and ... ) is a device that is arranged along a conveyance direction of the electrode sheet S, and that detects a thickness or a basis weight of the electrode sheet S. For example, the detection device 20 is a device that is managed by the worker W, and that is installed in the actual site of the coating line of the electrode sheet S. In the example illustrated in FIG. 1, a detection device 20-1, a detection device 20-2, ... , and the like are installed in a portion between an upstream side (on the side closer to a conveyance starting point) of the electrode sheet S and the downstream side (on the side away from conveyance starting point). Moreover, at least the two detection devices 20 are included in the coating amount measurement system 100 illustrated in FIG. 1, but a single piece of the detection device 20 may be included, or three or more of the detection devices 20 may be included.

1-2. Basic principle of coating amount measurement system 100

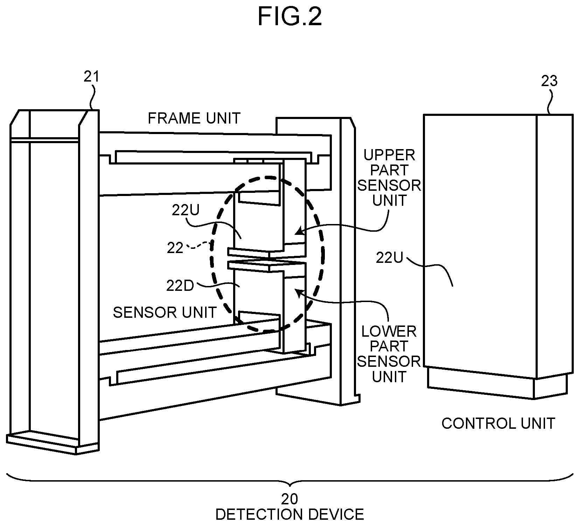

In the following, the basic principle of the coating amount measurement system 100 will be described with reference to FIG. 2 to FIG. 5. In the following, a specific example of the detection device 20 included in the coating amount measurement system 100, a specific example of the coating line performed in the coating amount measurement system 100, a specific example of a detection result obtained by the detection device 20 included in the coating amount measurement system 100, and a specific example of a detection position of the detection device 20 included in the coating amount measurement system 100 will be described.

1-2-1. Specific example of detection device 20 In the following, the specific example of the detection device 20 included in the coating amount measurement system 100 will be described with reference to FIG. 2. FIG. 2 is a diagram illustrating the specific example of the detection device 20 included in the coating amount measurement system 100 according to the embodiment. As indicated by the example illustrated in FIG. 2, the detection device 20 includes a frame unit 21, a sensor unit 22, and a control unit 23.

1-2-1-1. Frame unit 21

The frame unit 21 is a housing portion of the detection device 20, and is arranged perpendicular to a conveyance direction of the electrode sheet S. In the frame unit 21, the sensor unit 22 (an upper part sensor unit 22U and a lower part sensor unit 22D) is installed.

1-2-1-2. Sensor unit 22

The sensor unit 22 is constituted by a light source that irradiates measurement light, such as X-rays, β-rays, or infrared light, and a sensor head, and scans back and forth the electrode sheet S that is being conveyed. At this time, the sensor unit 22 detects a transmittance intensity of the measurement light that has been irradiated from the light source and that irradiates the electrode sheet S while moving along the frame unit 21 back and forth in a direction perpendicular to the conveyance direction of the electrode sheet S.

1-2-1-3. Control unit 23

The control unit 23 is communicably connected to the sensor unit 22 in a wired or wireless manner. The control unit 23 calculates a thickness [mm] or a basis weight [g/m$^2$] of the electrode sheet S from the transmittance intensity of the measurement light irradiating the electrode sheet S detected by the sensor unit 22. Furthermore, the control unit 23 may cause the measurement apparatus 10 to calculate the thickness [mm] or the basis weight [g/m$^2$] of the electrode sheet S by transmitting the transmittance intensity of the measurement light irradiating the electrode sheet S detected by the sensor unit 22 to the measurement apparatus 10.

1-2-2. Specific example of coating line

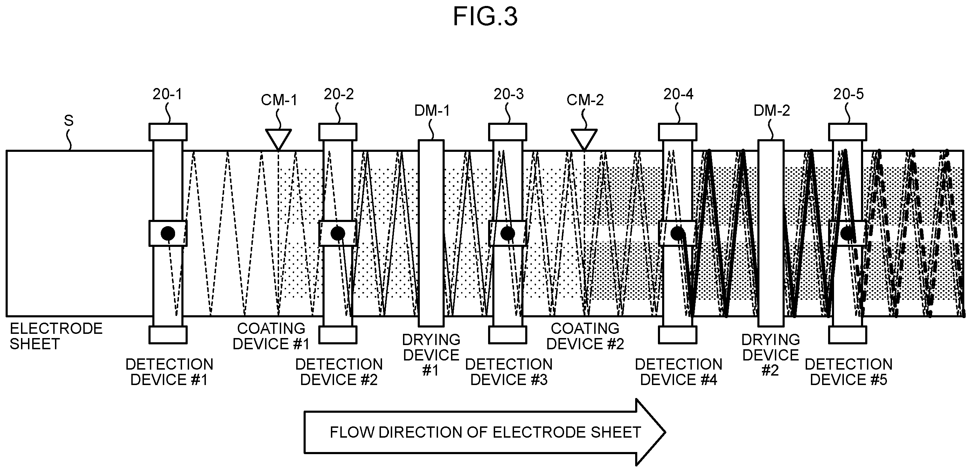

In the following, a specific example of the coating line provided in the coating amount measurement system 100 will be described with reference to FIG. 3. FIG. 3 is a diagram illustrating the specific example of the coating line provided in the coating amount measurement system 100 according to the embodiment. As indicated by the example illustrated in FIG. 3, the coating line provided in the coating amount measurement system 100 includes the detection device 20 (20-1, 20-2, 20-3, 20-4, and 20-5), the coating device CM (CM-1 and CM-2), and the drying device DM (DM-1 and DM-2).
In the example illustrated in FIG. 3, at a first step, the electrode sheet S is conveyed by a conveyance device (not illustrated), such as a roller, or the like at a constant speed. At a second step, a "detection device #1" that is the detection device 20-1 detects a thickness or a basis weight of the electrode sheet S before a first coating process (see the thin broken lines). At a third step, a "coating device #1" that is the coating device CM-1 performs the first coating process on the electrode sheet S (see the thin shadings). At a fourth step, a "detection device #2" that is the detection device 20-2 detects a thickness or a basis weight of the electrode sheet S after the first coating process and before a drying process (see the thin solid lines). At a fifth step, a "drying device #1" that is the drying device DM-1 dries the electrode sheet S that has been subjected to the first coating process. At a sixth step, a "detection device #3" that is the detection device 20-3 detects a thickness or a basis weight of the electrode sheet S after the first coating process and after the drying process, and also, before a second coating process (see the dashed lines). At a seventh step, a "coating device #2" that is the coating device CM-2 performs the second coating process on the electrode sheet S (see the dark shadings). At an eighth step, a "detection device #4" that is the detection device 20-4 detects a thickness or a basis weight of the electrode sheet S after the second coating process and before the drying process (see the thick solid lines). At a ninth step, a "drying device #2" that is the drying device DM-2 dries the electrode sheet S that has been subjected to the second coating process. At a tenth step, a "detection device #5" that is the detection device 20-5 detects a thickness or a basis weight of the electrode sheet S after the second coating process and also after the drying process (see the thick broken lines).

1-2-3. Specific example of detection result

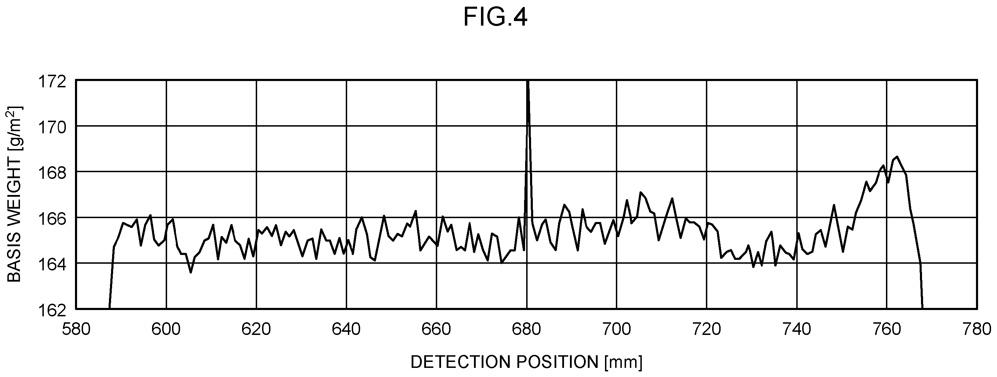

In the following, a specific example of a detection result obtained by the detection device 20 included in the coating amount measurement system 100 will be described with reference to FIG. 4. FIG. 4 is a diagram illustrating the specific example of the detection result obtained by the detection device 20 included in the coating amount measurement system 100 according to the embodiment.
As indicated by the example illustrated in FIG. 4, the detection device 20 outputs a detection result that displays a "basis weight" indicating a weight [g/m$^2$] per unit area of the electrode sheet S on the vertical axis, and the detection result that displays a "detection position" indicating a position in which the basis weight has been detected on the horizontal axis. In the example illustrated in FIG. 4, in the range of 580 to 780 mm of the electrode sheet S in the width direction, a basis weight of the electrode sheet S is displayed in the range of 162 to 172 g/m$^2$. At this time, the detection device 20 may also output a detection result that displays a "thickness" indicating a thickness [mm] of the electrode sheet S on the vertical axis.
Furthermore, the detection device 20 acquires a detection result as a detection profile $P_0$ for each movement of the detection device 20 back and forth one-half times. Here, the detection profile $P_0$ is constituted by a combination of a detection position Y that is the position of the sensor unit 22 above the electrode sheet S in the width direction, and a detection value $D_0$ of a thickness or a basis weight of the electrode sheet S. For example, the detection profile $P_0$ is a data group that includes a plurality of detection results indicated by $P_0 = \{(Y_1, D_0 (1)), (Y_2, D_0 (2)), (Y_3, D_0 (3)), ...$ , and $(Y_m, D_0 (m))\}$, as the combination of m points of detection positions $Y_1, Y_2, Y_3, ...$ , and $Y_m$ at the electrode sheet S in the width direction and associated detection values $D_0 (1), D_0 (2), D_0 (3), ...$ , and $D_0 (m)$, respectively.

1-2-4. Specific example of detection position

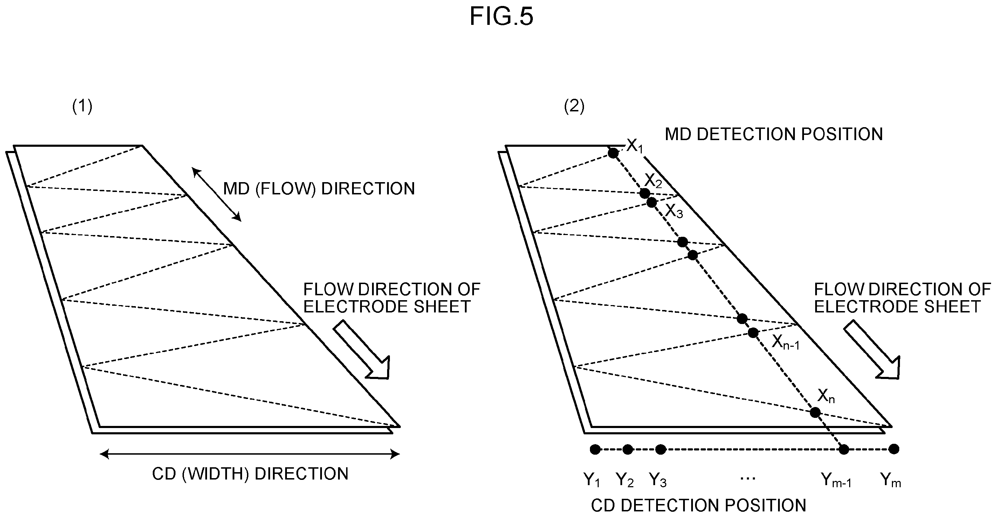

In the following, a specific example of the detection position indicated by the detection device 20 included in the coating amount measurement system 100 will be described with reference to FIG. 5. FIG. 5 is a diagram illustrating a specific example of the detection position indicated by the detection device 20 included in the coating amount measurement system 100 according to the embodiment.

As indicated by the example of (1) illustrated in FIG. 5, the sensor unit 22 included in the detection device 20 acquires a transmittance intensity of the measurement light that has been irradiated from the light source and that irradiates the electrode sheet S while moving along the frame unit 21 back and forth in a direction perpendicular to the conveyance direction of the electrode sheet S. (see thin broken lines). Here, a conveyance direction of the electrode sheet S, that is, a flow direction of the electrode sheet S is referred to as a Machine Direction (MD) direction. Furthermore, a direction perpendicular to a conveyance direction of the electrode sheet S, that is, a width direction of the electrode sheet S is referred to as a Cross Direction (CD) direction.

As indicated by the example of (2) illustrated in FIG. 5, the control unit 23 included in the detection device 20 specifies, on the basis of a conveyance speed of the electrode sheet S and a moving speed of the sensor unit 22, MD detection positions $X_1, X_2, X_3, ...$ , and $X_n$ that are the detection position X in the MD direction, and CD detection positions $Y_1, Y_2, Y_3, ... Y_{m-1}$, and $Y_m$ that are the detection position Y in the CD direction, and then stores the specified detection positions together with the detection value $D_0$ of the thickness or the basis weight of the electrode sheet S calculated from the transmittance intensity of the electrode sheet S. In the example indicated by (2) illustrated in FIG. 5, only the MD detection position X associated with the CD detection position $Y_{m-1}$ is illustrated as the MD detection position X.

As described above, the detection device 20 acquires a single piece of the detection profile $P_0$ including the detection values $D_0$ obtained at m points of the CD detection positions Y every time the sensor unit 22 moves above the electrode sheet S back and forth one-half times. Furthermore, in a case where the sensor unit 22 moves above the electrode sheet S back and forth n and one-half of n times (back and forth movement n/2 times), the detection device 20 acquires the detection values $D_0$ indicated at n points of the MD detection positions X for each CD detection position Y.

1-3. Example of process performed in coating amount measurement system 100

An example of the process performed in the coating amount measurement system 100 will be described with reference again to FIG. 1. In the following, a sheet conveyance process, a detection profile acquisition process, a detection profile collection process, a CD smoothing process, and a MD smoothing process will be described. Moreover, the processes indicated by (1) to (5) described below may also be performed in different order. In addition, some of the processes indicated by (1) to (5) described below may also be omitted.

1-3-1. Sheet conveyance process

At a first step, the worker W conveys the electrode sheet S that is the measurement object at a constant speed (see (1) in FIG. 1). For example, the worker W conveys the electrode sheet S at a constant conveyance speed by operating a roller provided in the coating line (not illustrated). Here, the measurement object is not limited to a metal foil constituting the electrode sheet S, or the like, but may also be an object in the form of a sheet made of paper, a plastic film, or the like.

1-3-2. Detection profile acquisition process

At a second step, the detection device 20 acquires the detection profile $P_0$ of the conveyed electrode sheet S (see (2) in FIG. 1). For example, the detection device 20 acquires, as the detection profile $P_0$ that is output every time the sensor unit 22 included in the detection device 20 moves back and forth one-half times, n data groups $P_0 (1), P_0 (2), P_0 (3), ...$ , and $P_0 (n)$ including m detection values $D_0$.

1-3-3. Detection profile collection process

At a third step, the measurement apparatus 10 collects the detection profiles $P_0$ from the detection device 20 (see (3) in FIG. 1). For example, the measurement apparatus 10 collects, from the detection device 20-1, the detection profile $P_0$-1 that has been acquired by the detection device 20-1. Furthermore, the measurement apparatus 10 collects, from the detection device 20-2, the detection profile $P_0$-2 that has been acquired by the detection device 20-2.

1-3-4. CD smoothing process

At a fourth step, the measurement apparatus 10 performs smoothing on the detection profile $P_0$ in the CD direction (see (4) in FIG. 1). For example, the measurement apparatus 10 applies a smoothing filter for performing smoothing; performs smoothing on the detection profiles $P_0$ (1), $P_0$ (2), $P_0$ (3), ... , and $P_0$ (n) in units of the same MD detection position X, that is, m detection values $D_0$ included in the detection profile $P_0$; and outputs $P_1$ (1), $P_1$ (2), $P_1$ (3), ... , and $P_1$ (n) as the CD smoothing profile $P_1$ each including m pieces of the first smoothing detection values $D_1$.
At this time, the measurement apparatus 10 is able to select, as the smoothing filter, a moving average filter, a median filter, a Gaussian filter, a moving average filter with threshold, a median filter with threshold, or a Gaussian filter with threshold. Furthermore, the measurement apparatus 10 performs smoothing on the basis of a computational width, a distribution, a threshold, or the like designated by the worker W. Here, the measurement apparatus 10 performs smoothing in the CD smoothing process by using the values indicated on both sides of a focused point (a point i).

1-3-5. MD smoothing process

At a fifth step, the measurement apparatus 10 performs smoothing on the CD smoothing profile $P_1$ in the MD direction (see (5) in FIG. 1). For example, the measurement apparatus 10 applies a smoothing filter for performing smoothing; performs smoothing on the CD smoothing profiles $P_1$ (1), $P_1$ (2), $P_1$ (3), ... , and $P_1$(n) in units of the same CD detection positions Y, that is, performs smoothing on n pieces of the first smoothing detection values $D_1$ included in the CD smoothing profile $P_1$; and outputs $P_2$ (1), $P_2$ (2), $P_2$ (3), ... , and $P_2$ (n) as the MD smoothing profile $P_2$ each including m pieces of the second smoothing detection values $D_2$.
At this time, similarly to the CD smoothing process, the measurement apparatus 10 is able to select, as the smoothing filter, a moving average filter, a median filter, a Gaussian filter, a moving average filter with threshold, a median filter with threshold, or a Gaussian filter with threshold. Furthermore, the measurement apparatus 10 performs smoothing on the basis of a computational width, a distribution, a threshold, a SMF (smoothing factor value obtained this time), or the like designated by the worker W. Here, in the MD smoothing process, a focused point is always the most recent profile, so that the measurement apparatus 10 performs smoothing by using only the past data. In addition, the measurement apparatus 10 is able to apply an exponential smoothing method in addition to applying the smoothing filter described above.

1-3-6. Others

In FIG. 1 indicated by (1) to (5), as the smoothing process performed on the detection profile $P_0$, the example of the process in which the CD smoothing process is performed first, and then the MD smoothing process is performed has been described, but the order of the smoothing processes is not particularly limited. For example, in the coating amount measurement system 100, the measurement apparatus 10 is able to perform the smoothing process in the order of the MD smoothing process and the CD smoothing process. Furthermore, the measurement apparatus 10 is able to perform one of the CD smoothing process and the MD smoothing process.
Furthermore, in FIG. 1 indicated by (1) to (5), the example of the process in which smoothing is performed by selecting a single type of smoothing filter as the smoothing filter has been described, but the number of smoothing filters that are able to be applied is not particularly limited. For example, in the coating amount measurement system 100, the measurement apparatus 10 is able to apply two or more types of smoothing filters in combination from among the six types of smoothing filters of the moving average filter, the median filter, the Gaussian filter, the moving average filter with threshold, the median filter with threshold, and the Gaussian filter with threshold. Furthermore, the measurement apparatus 10 may also apply the same smoothing filter in the CD smoothing process and the MD smoothing process, or may also apply different types of smoothing filters. Furthermore, the measurement apparatus 10 is able to select a smoothing filter for each standard deviation $\sigma$ or a range R intended for the characteristic (for example: a material or a thickness) of the measurement object. In addition, the measurement apparatus 10 is also able to repeatedly apply the same smoothing filter.

1-4. Effect of coating amount measurement system 100

In the following, the outline of and a problem in a coating amount measurement system 100P according to the reference technology will be described first, and then, the effect of the coating amount measurement system 100 will be described.

### 1-4-1. Outline of coating amount measurement system 100P

The outline of the coating amount measurement system 100P according to a reference technology will be described. In the coating amount measurement system 100P, a smoothing algorithm for one of the moving average and the exponential smoothing method is applied by focusing on only the flow direction of the electrode sheet S, that is the MD direction, and using a past detection value $D_0$ obtained at the same CD detection position Y. In other words, in the coating amount measurement system 100P, only the MD smoothing process is performed without performing the CD smoothing process. In the following, the moving average and the exponential smoothing method will be described.

### 1-4-1-1. Moving average

The moving average is expressed by Equation (1) below, and is a smoothing algorithm in which a this-time smoothing profile that is the most recent smoothed data group is used as an average value of past detection profiles that are obtained multiple times in the past and that are obtained at the same detection position.

$$SPV_{n,i} = \frac{\sum_{m=n-k+1}^{n} MPV_{m,i}}{k} \qquad \cdots (1)$$

Moreover, in Equation (1) above, "k" denotes a specified number of times of averaging, "$SPV_{n,i}$" denotes the detection value $D_0$ included in an $n^{th}$ smoothing profile at the point i, and "$MPV_{m,i}$" denotes the detection value $D_0$ included in a $m^{th}$ detection profile at the point i.

### 1-4-1-2. Exponential smoothing method

The exponential smoothing method is expressed by Equation (2) below, and is a smoothing algorithm in which a this-time smoothing profile that is the most recent smoothed data group is used as a result obtained by adding, at a constant rate, a this-time detection profile that is the most recent detected data group to a last-time smoothing profile that is a data group that has been subject to smoothing last time and that is obtained at the same CD detection position Y.

$$SPV_{n,i} = SMF \times MPV_{n,i} + (1 - SMF) \times SPV_{n-1,i} \qquad \cdots (2)$$

Moreover, in Equation (2) above, "$SPV_{n,i}$" denotes the detection value $D_0$ included in the $n^{th}$ smoothing profile at the point i, "$MPV_{n,i}$" denotes the detection value $D_0$ included in an $n^{th}$ detection profile at the point i, and "SMF" denotes a smoothing factor value (the rate of the this-time detection profile value: 0 to 1).

### 1-4-2. Problem in coating amount measurement system 100P

A problem in the coating amount measurement system 100P according to the reference technology will be described. In the following, a first to a third problems in the coating amount measurement system 100P will be described.

### 1-4-2-1. First problem

As a first problem, in the coating amount measurement system 100P, there is a problem in that a large error occurs in a case where an amount of accumulated past data is low. The coating amount measurement system 100P performs only the MD smoothing process, so that the value of the standard deviation $\sigma$ or the range R is not stable until after the number of detection profiles $P_0$ corresponding to an amount obtained from 10 to 30 detection results of the detection profiles $P_0$ are collected. As a result of this, in the coating amount measurement system 100P, the quality of products (for example: a sheet or paper) produced before the value of the standard deviation $\sigma$ or the range R becomes stable is not guaranteed, so that the products need to be disposed, and thus, a loss in raw material has occurred.

### 1-4-2-2. Second problem

At a second step, in the coating amount measurement system 100P, there is a problem in that it is difficult to change a hardware configuration. In the coating amount measurement system 100P, in order to cope with various measurement objects, a plurality of types of radiation sources, such as β-rays, X-rays, and infrared light, are handled. For example, in the coating amount measurement system 100P, in a case of β-rays, various kinds of radiation sources are able to be selected in accordance with a basis weight, and a radiation source is used by selecting from among krypton 85 (85 Kr: 15.54 GBq or 37 GBq), promethium 147 (147 Pm: 12.95 GBq or 37 GBq), and strontium 90 (90 Sr: 0.74 GBq or 3.7 GBq). As a result of this, in the coating amount measurement system 100P, the characteristics are different in accordance with the radiation source to be used, so that, in a case where the hardware configuration is not changed, in some cases, the value of the standard deviation σ or the range R does not become smaller to the desired level. In contrast, in the coating amount measurement system 100P, in order to change the hardware configuration, a large amount cost is needed due to development or the like, so that there are demands for a reduction in the value of the standard deviation σ or the range R by figuring out good ways to design software (program).

1-4-2-3. Third problem

As a third problem, in the coating amount measurement system 100P, there is a problem in that it is difficult to cope with leakage dose. In the coating amount measurement system 100P, in order to keep the value of the standard deviation σ or the range R low while reducing the leakage dose, it is difficult to implement countermeasures related to hardware alone, and it is also necessary to implement countermeasures related to software as well.

1-4-3. Outline of coating amount measurement system 100

The outline of the coating amount measurement system 100 according to the embodiment will be described. In the coating amount measurement system 100, the following processes are performed. At a first step, the worker W conveys the electrode sheet S that is a measurement object at a constant speed. At a second step, the detection device 20 outputs the detection profile $P_0$ of the conveyed electrode sheet S. At a third step, the measurement apparatus 10 collects the detection profiles $P_0$ from the detection device 20. At a fourth step, the measurement apparatus 10 performs smoothing on the detection profile $P_0$ in the CD direction, and outputs the CD smoothing profile $P_1$. At a fifth step, the measurement apparatus 10 performs smoothing on the CD smoothing profile $P_1$ in the MD direction, and outputs the MD smoothing profile $P_2$.

Furthermore, the measurement apparatus 10 is able to select, as a smoothing filter, a moving average filter, a median filter, a Gaussian filter, a moving average filter with threshold, a median filter with threshold, or a Gaussian filter with threshold. Here, the measurement apparatus 10 performs smoothing in the CD smoothing process by using the values indicated on both sides of a focused point (a point i). Furthermore, in the MD smoothing process, a focused point is always the most recent profile, so that the measurement apparatus 10 performs smoothing by using only the past data.

1-4-4. Effects of coating amount measurement system 100

The effects of the coating amount measurement system 100 according to the embodiment will be described. In the following, a first to a third effects of the coating amount measurement system 100 will be described. As will be described below, in the coating amount measurement system 100, it is possible to improve the measurement accuracy of a thickness or a basis weight.

1-4-4-1. First effect

As a first effect, in the coating amount measurement system 100, a measurement error is small even in a case where an amount of accumulated past data is low. In the coating amount measurement system 100, the MD smoothing process is performed after the CD smoothing process has been performed, so that the value of the standard deviation σ or the range R is stable even in a state in which only a small number of detection profiles $P_0$ are collected as compared to the coating amount measurement system 100P. As a result of this, in the coating amount measurement system 100, it is possible to reduce a loss in raw material caused by disposal of the products produced before the value of the standard deviation σ or the range R becomes stable.

1-4-4-2. Second effect

As a second effect, the coating amount measurement system 100 is able to cope with various measurement objects without changing the hardware configuration. In the coating amount measurement system 100, it is possible to select a smoothing filter for each characteristic of the measurement object, a targeted standard deviation σ, or a target range R, so that it is possible to reduce the value of the standard deviation σ or the range R by only changing the software.

1-4-4-3. Third effect

As a third effect, the coating amount measurement system 100 is able to cope with leakage dose. In the coating amount measurement system 100, it is possible to select a smoothing filter for each characteristic of the measurement object, a targeted standard deviation σ, or a target range R, so that it is possible to implement countermeasures against software that stores therein the value of the standard deviation σ or the range R in a small size while reducing the leakage dose.

2. Configuration and process related to each device included in coating amount measurement system 100

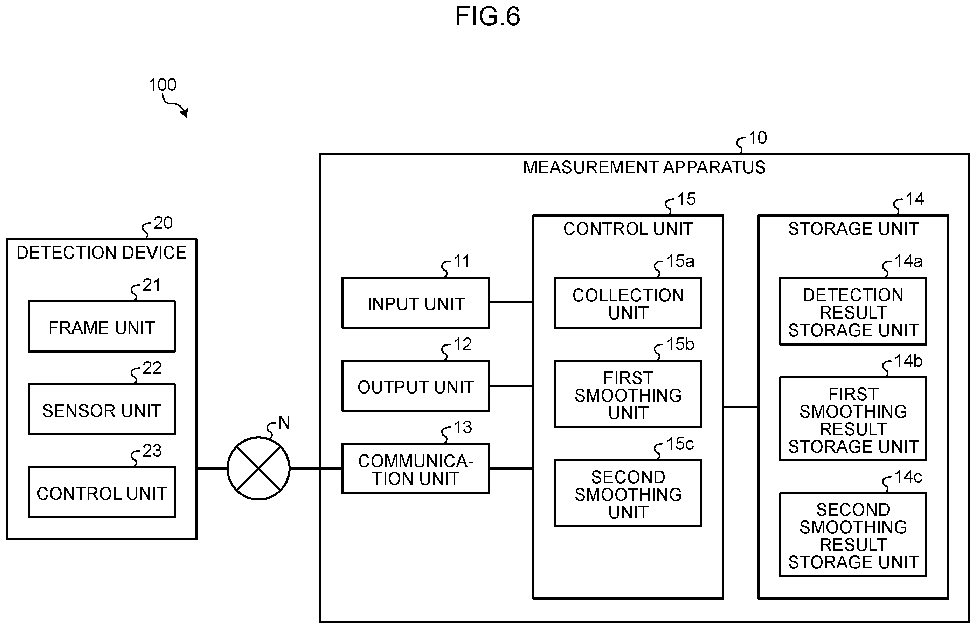

A configuration and a process related to each of the devices included in the coating amount measurement system 100 illustrated in FIG. 1 will be described with reference to FIG. 6. FIG. 6 is a block diagram illustrating a configuration example of each of the devices included in the coating amount measurement system 100 according to the embodiment. In the following, an example of the overall configuration of the coating amount measurement system 100 according to the embodiment, a configuration example and a process example related to the measurement apparatus 10, and a configuration example and a process example related to the detection device 20 will be described.

2-1. Example of overall configuration of coating amount measurement system 100

An example of the overall configuration of the coating amount measurement system 100 illustrated in FIG. 1 will be described with reference to FIG. 6. As illustrated in FIG. 6, the coating amount measurement system 100 is constituted by the measurement apparatus 10 and the detection device 20. Furthermore, the measurement apparatus 10 and the detection device 20 are communicably connected one another by a communication network N that is implemented by the Internet, a dedicated line, or the like. Furthermore, the measurement apparatus 10, the coating device CM (not illustrated), the drying device DM (not illustrated), and the conveyance device (not illustrated) are communicably connected one another by using an analog signal, a pulse signal, Ethernet (registered trademark), or the like.

2-2. Configuration example and process example related to measurement apparatus 10

A configuration example and a process example related to the measurement apparatus 10 will be described with reference to FIG. 6. The measurement apparatus 10 includes an input unit 11, an output unit 12, a communication unit 13, a storage unit 14, and a control unit 15.

2-2-1. Input unit 11

The input unit 11 manages an input of various kinds of information with respect to the measurement apparatus 10. For example, the input unit 11 is implemented by a mouse, a keyboard, and the like, and receives an input of various kinds of information to the measurement apparatus 10.

2-2-2. Output unit 12

The output unit 12 manages an output of various kinds of information received from the measurement apparatus 10. For example, the output unit 12 is implemented by a display, or the like, and displays various kinds of information stored in the measurement apparatus 10.
Furthermore, the output unit 12 displays various kinds of information that are output from the control unit 15. For example, the output unit 12 displays a first smoothing result that has been output from a first smoothing unit 15b that will be described later and that is included in the control unit 15. Furthermore, the output unit 12 displays a second smoothing result that has been output from a second smoothing unit 15c that will be described later and that is included in the control unit 15.

2-2-3. Communication unit 13

The communication unit 13 manages data communication performed with the other devices. For example, the communication unit 13 performs data communication with each of the communication devices via a router, or the like. Furthermore, the communication unit 13 is able to perform data communication with a terminal that is used by an operator (not illustrated).

2-2-4. Storage unit 14

The storage unit 14 stores therein various kinds of information referred to by the control unit 15 when the control unit 15 operates, and various kinds of information that have been acquired when the control unit 15 operates. The storage unit 14 includes a detection result storage unit 14a, a first smoothing result storage unit 14b, and a second smoothing result storage unit 14c. Here, the storage unit 14 is implemented by, for example, a semiconductor memory device, such as a random access memory (RAM) or a flash memory, or a storage device, such as a hard disk or an optical disk. Moreover, in the example illustrated in FIG. 6, the storage unit 14 is installed in the measurement apparatus 10; however, the storage unit 14 may be installed outside the measurement apparatus 10, or a plurality of storage units may be installed.

2-2-4-1. Detection result storage unit 14a

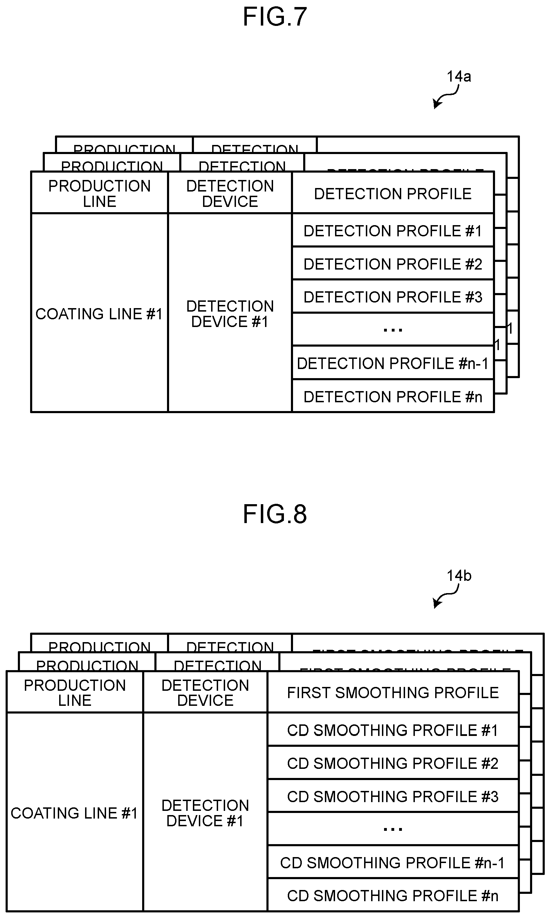

The detection result storage unit 14a stores therein a detection result. For example, the detection result storage unit 14a stores therein the detection results collected by a collection unit 15a that will be described later and that is included in the control unit 15. In the following, one example of data stored in the detection result storage unit 14a will be described with reference to FIG. 7. FIG. 7 is a diagram illustrating one example of the detection result storage unit 14a included in the measurement apparatus 10 according to the embodiment. In the example illustrated in FIG. 7, the detection result storage unit 14a includes items of a "production line", a "detection device", and a "detection profile".

The "production line" indicates identification information for identifying a production process of a measurement object, and is, for example, an identification number or an identification symbol of a coating line of the electrode sheet S. The "detection device" indicates identification information on the detection device 20 installed in the production process of the measurement object, and is, for example, an identification number or an identification symbol of the detection device 20 installed in the coating line. The "detection profile" indicates the detection profiles $P_0$ collected by the collection unit 15a, and is, for example, m sets of data groups formed of the CD detection positions Y of the electrode sheet S in the width direction and the detection values $D_0$ of the thickness or the basis weight of the electrode sheet S.

In other words, FIG. 7 illustrates an example in which the detection result storage unit 14a stores therein data related to the production line identified by a "coating line #1" and the detection device 20-1 identified by a "detection device #1" is the data of a "detection profile #1", a "detection profile #2", a "detection profile #3", ... , a "detection profile #n-1", and a "detection profile #n".

2-2-4-2. First smoothing result storage unit 14b

The first smoothing result storage unit 14b stores therein a first smoothing result. For example, the first smoothing result storage unit 14b stores therein the first smoothing result that has been output by the first smoothing unit 15b that will be described later and that is included in the control unit 15. In the following, one example of the data stored in the first smoothing result storage unit 14b will be described with reference to FIG. 8. FIG. 8 is a diagram illustrating one example of the first smoothing result storage unit 14b included in the measurement apparatus 10 according to the embodiment. In the example illustrated in FIG. 8, the first smoothing result storage unit 14b includes items of a "production line", a "detection device", and a "first smoothing profile".

The "production line" indicates identification information for identifying a production process of a measurement object, and is, for example, an identification number or an identification symbol of a coating line of the electrode sheet S. The "detection device" indicates identification information on the detection device 20 installed in the production process of the measurement object, and is, for example, an identification number or an identification symbol of the detection device 20 installed in the coating line. The "first smoothing profile" indicates the CD smoothing profile $P_1$ that has been output by the first smoothing unit 15b, and is, for example, m sets of data groups formed of the CD detection positions Y of the electrode sheet S in the width direction and the first smoothing detection values Di of the thickness or the basis weight of the electrode sheet S that has been subjected to the CD smoothing process.

In other words, FIG. 8 illustrates an example in which the first smoothing result storage unit 14b stores therein data related to the production line identified by the "coating line #1" and the detection device 20-1 identified by the "detection device #1" is the data of a "CD smoothing profile #1", a "CD smoothing profile #2", a "CD smoothing profile #3", ... , a "CD smoothing profile #n-1", and a "CD smoothing profile #n".

2-2-4-3. Second smoothing result storage unit 14c

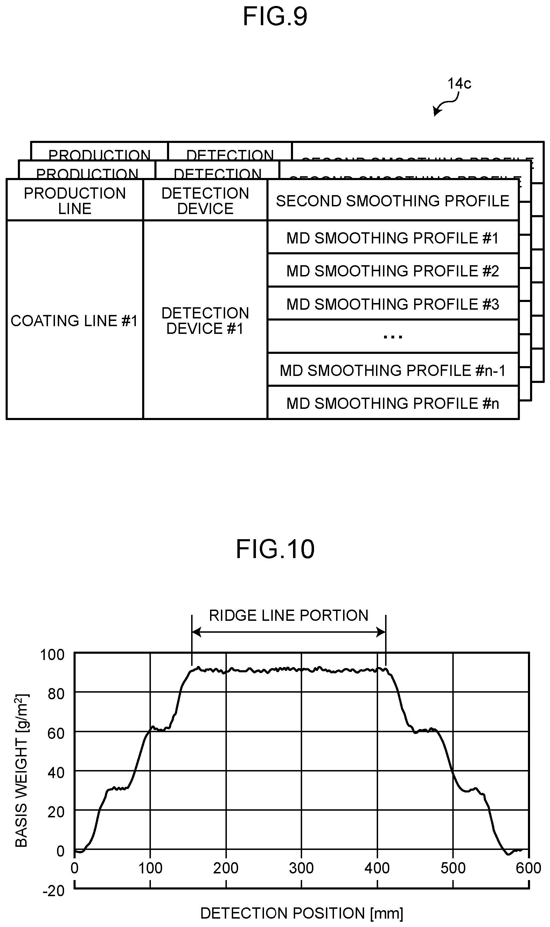

The second smoothing result storage unit 14c stores therein a second smoothing result. For example, the second smoothing result storage unit 14c stores therein the second smoothing result that has been output by the second smoothing unit 15c that will be described later and that is included in the control unit 15. In the following, one example of the data stored in the second smoothing result storage unit 14c will be described with reference to FIG. 9. FIG. 9 is a diagram illustrating one example of the second smoothing result storage unit 14c included in the measurement apparatus 10 according to the embodiment. In the example illustrated in FIG. 9, the second smoothing result storage unit 14c includes items of a "production line", a "detection device", and a "second smoothing profile".

The "production line" indicates identification information for identifying a production process of a measurement object, and is, for example, an identification number or an identification symbol of a coating line of the electrode sheet S. The "detection device" indicates identification information on the detection device 20 installed in the production process of the measurement object, and is, for example, an identification number or an identification symbol of the detection device 20 installed in the coating line. The "second smoothing profile" indicates the MD smoothing profile $P_2$ that has been output by the second smoothing unit 15c, and is, for example, m sets of data groups formed of the CD detection positions Y of the electrode sheet S in the width direction and the second smoothing detection values $D_2$ of the thickness or the basis weight of the electrode sheet S that has been sequentially subjected to the CD smoothing process and the MD smoothing process.

In other words, FIG. 9 illustrates an example in which the second smoothing result storage unit 14c stores therein data related to the production line identified by the "coating line #1" and the detection device 20-1 identified by the "detection device #1" is the data of a "MD smoothing profile #1", a "MD smoothing profile #2", a "MD smoothing profile #3", ... , a "MD smoothing profile #n-1", and a "MD smoothing profile #n".

2-2-5. Control unit 15

The control unit 15 manages the overall control of the measurement apparatus 10. The control unit 15 includes the collection unit 15a, the first smoothing unit 15b, and the second smoothing unit 15c. Here, control unit 15 is implemented by, for example, an electronic circuit, such as a central processing unit (CPU) or a micro processing unit (MPU), or an integrated circuit, such as an application specific integrated circuit (ASIC) or a field programmable gate array (FPGA).

2-2-5-1. Collection unit 15a

The collection unit 15a collects various kinds of information via the communication network N. Moreover, the collection unit 15a may store the collected various kinds of information in the storage unit 14. In the following, a detection profile collection control process will be described.

Detection profile collection control process

the collection unit 15a performs the detection profile collection control process. For example, the collection unit 15a collects, from the detection device 20, the detection profile $P_0$ including a plurality of detection values $D_0$ related to a thickness or a basis weight of the measurement object that is in the form of a sheet and that is to be conveyed. At this time, the collection unit 15a collects, from the detection device 20, the detection profile $P_0$ including the basis weight [g/m$^2$] detected at each of the CD detection positions of the electrode sheet S to be conveyed. Furthermore, the collection unit 15a collects, from the detection device 20, the detection profile $P_0$ including the thickness [mm] detected at each of the CD detection positions of the electrode sheet S to be conveyed. Furthermore, the collection unit 15a is also able to collect, from the detection device 20, the detection profile $P_0$ including a transmittance intensity of the measurement light, such as β-rays, X-rays, or infrared light, detected at each of the CD detection positions of the electrode sheet S to be conveyed.

A specific example of the detection profile collection control process will be described. The collection unit 15a collects the "detection profile #1", the "detection profile #2", the "detection profile #3", ... , the "detection profile #n-1", and the "detection profile #n" as the detection profile $P_0$-1 that has been acquired by a sensor unit 22-1 included in the "detection device #1" that is the detection device 20-1, and stores the collected detection profiles in the detection result storage unit 14a.

2-2-5-2. First smoothing unit 15b

The first smoothing unit 15b outputs the first smoothing result. At this time, the first smoothing unit 15b outputs the first smoothing result to the second smoothing unit 15c. Moreover, the first smoothing unit 15b may also store the output first smoothing result in the storage unit 14. Furthermore, the first smoothing unit 15b may also display the output first smoothing result on the output unit 12. In the following, the first smoothing result management process will be described.

First smoothing result management process

The first smoothing unit 15b performs the first smoothing result management process. For example, the first smoothing unit 15b performs, by using a smoothing filter, smoothing on the plurality of detection values $D_0$ included in the detection profile $P_0$ related to the width direction (CD direction) that is perpendicular to the conveyance direction of the measurement object, and outputs the first smoothing profile $P_1$. At this time, the smoothing filter is, for example, at least one of a moving average filter, a median filter, a Gaussian filter, a moving average filter with threshold, a median filter with threshold, and a Gaussian filter with threshold. Moreover, the details of the smoothing filter will be described later with the title of [3. specific example of each process performed in coating amount measurement system 100].

A specific example of the first smoothing result management process will be described. First, the first smoothing unit 15b refers to the "detection profile #1", the "detection profile #2", the "detection profile #3", ... , the "detection profile #n-1", and the "detection profile #n" as the detection profile $P_0$-1 that is stored in the detection result storage unit 14a. Then, the first smoothing unit 15b selects a smoothing filter, and then performs smoothing on the detection values $D_0$-1 that are included in the detection profile $P_0$-1 and that are obtained at each of the same MD detection positions X included in the detection profile $P_0$-1, that is, performs smoothing in the CD direction. Then, the first smoothing unit 15b outputs, as the CD smoothing profile $P_1$-1, the "CD smoothing profile #1", the "CD smoothing profile #2", the "CD smoothing profile #3", ... , the "CD smoothing profile #n-1", and the "CD smoothing profile #n" including the first smoothing detection values $D_1$-1 that have been subjected to the first smoothing process, and stores the CD smoothing profiles in the first smoothing result storage unit 14b.

2-2-5-3. Second smoothing unit 15c

The second smoothing unit 15c outputs the second smoothing result. Moreover, the second smoothing unit 15c may also store the output second smoothing result in the storage unit 14. Furthermore, the second smoothing unit 15c may also cause the output unit 12 to display the output second smoothing result. In the following, the second smoothing result management process will be described.

Second smoothing result management process

The second smoothing unit 15c performs the second smoothing result management process. For example, the second smoothing unit 15c performs, by using a smoothing filter, smoothing on the plurality of detection values $D_1$ that have been subjected to the smoothing related to the width direction (CD direction) that is perpendicular to the conveyance direction of the measurement object and that are included in the first smoothing profile $P_1$ related to the conveyance direction (MD direction) of the measurement object, and outputs the second smoothing profile $P_2$. At this time, the smoothing filter is, for example, at least one of a moving average filter, a median filter, a Gaussian filter, a moving average filter with threshold, a median filter with threshold, and a Gaussian filter with threshold. Furthermore, the second smoothing unit 15c is able to apply an exponential smoothing method in addition to applying the smoothing filter described above. Moreover, the details of the smoothing filter will be described later with the title of [3. specific example of each process performed in coating amount measurement system 100].

A specific example of the second smoothing result management process will be described. First, the second smoothing unit 15c refers to the "CD smoothing profile #1", the "CD smoothing profile #2", the "CD smoothing profile #3", ... , the "CD smoothing profile #n-1", and the "CD smoothing profile #n" as the CD smoothing profile $P_1$-1 stored in the first smoothing result storage unit 14b. Then, the second smoothing unit 15c selects a smoothing filter, and then performs smoothing on the detection values $D_1$-1 that are included in the CD smoothing profile $P_1$-1 and that are obtained at each of the same CD detection positions Y included in the CD smoothing profile $P_1$-1, that is, performs smoothing in the MD direction. Then, the second smoothing unit 15c outputs, as the MD smoothing profile $P_2$-1, the "MD smoothing profile #1", the "MD smoothing profile #2", the "MD smoothing profile #3", ... , the "MD smoothing profile #n-1", and the "MD smoothing profile #n" including the second smoothing detection values $D_2$-1 that have been subjected to the second smoothing process, and stores the MD smoothing profiles in the first smoothing result storage unit 14b.

2-3. Configuration example and process example related to detection device 20

The configuration example and the process example related to the detection device 20 will be described again with reference to FIG. 6. The detection device 20 is installed in the coating line for coating the measurement object that is in the form of a sheet. Furthermore, the detection device 20 calculates a thickness or a basis weight of the measurement object that is in the form of a sheet at each of the detection positions by using a transmittance intensity that has been detected by irradiating the measurement object in the form of a sheet with $\beta$-rays, X-rays, or infrared light. For example, the detection device 20 is installed in a coating line for coating a metal foil, paper, a plastic film, or the like constituting the electrode sheet S, or the like as a measurement object that is in the form of a sheet. Furthermore, the detection device 20 includes the frame unit 21, the sensor unit 22, and the control unit 23.

2-3-1. Frame unit 21

The frame unit 21 is a housing portion made of metal, and in which the sensor unit 22 (the upper part sensor unit 22U and the lower part sensor unit 22D) is installed.

2-3-2. Sensor unit 22

The sensor unit 22 irradiates the measurement object in the form of a sheet with measurement light, such as β-rays, X-rays, or infrared light, and detects a transmittance intensity of the measurement light. For example, the sensor unit 22 is implemented by upper and lower sensor heads, a light source that emits radiation of X-rays or β-rays, a light source that emits infrared light, or the like, and detects a transmittance intensity of the measurement light irradiating the electrode sheet S.

2-3-3. Control unit 23

The control unit 23 is communicably connected to the sensor unit 22 in a wired or wireless manner. Furthermore, the control unit 23 controls a process of a movement of the sensor unit 22 along the frame unit 21 back and forth, a process of irradiating measurement light, a process of detecting a transmittance intensity of the measurement light, and the like. Furthermore, the control unit 23 calculates a thickness [mm] or a basis weight [g/m$^2$] of the electrode sheet S from the transmittance intensity of the electrode sheet S detected by the sensor unit 22.

3. Specific example of each process performed in coating amount measurement system 100

A specific example of each of the processes performed in the coating amount measurement system 100 according to the embodiment will be described with reference to FIG. 10 to FIG. 19. In the following, the outline of the smoothing filter applied in the coating amount measurement system 100 will be described, and then, a first to a third application effects of the smoothing filter will be described.

3-1. Outline of smoothing filter

The outline of the smoothing filter applied to the coating amount measurement system 100 will be described. In the following, a moving average filter, a median filter, a Gaussian filter, a moving average filter with threshold, a median filter with threshold, and a Gaussian filter with threshold will be described.

3-1-1. Moving average filter

The moving average filter is a smoothing algorithm for performing a smoothing process by calculating an average value of the detection values $D_0$ included in past detection profiles $P_0$ detected k times on the basis of the designated computational width.

3-1-2. Median filter

The median filter is a smoothing algorithm for performing a smoothing process by outputting a median value of the detection values $D_0$ included in the detection profile $P_0$ on the basis of the designated computational width. Moreover, in the median filter, it is possible to suppress deterioration of a shape of the detection profile $P_0$ due to the smoothing process, which makes it possible to clarify the shape of an edge portion.

3-1-3. Gaussian filter

The Gaussian filter is a smoothing algorithm for performing a smoothing process, by using kernels based on the Gaussian distribution function, on the detection values $D_0$ included in the detection profile $P_0$ on the basis of the designated computational width and distribution. Moreover, in the Gaussian filter, it is possible to suppress deterioration of a shape of the detection profile $P_0$ due to the smoothing process, which makes it possible to clarify the shape of an edge portion.

3-1-4. Moving average filter with threshold

The moving average filter with threshold is a moving average filter in which a threshold has been set. Moreover, in the moving average filter with threshold, as compared to the moving average filter, it is possible to leave the shape of a sudden change (for example: occurring when dust is attached on the electrode sheet S) caused by other than noise. Furthermore, in the moving average filter with threshold, in a case where a threshold is set to very high, the result is the same as that obtained from the moving average filter. Furthermore, in the moving average filter with threshold, in a case where a threshold is set to zero, an input value is returned without any change.

3-1-5. Median filter with threshold

The median filter with threshold is a median filter in which a threshold has been set. Moreover, in the median filter with threshold, as compared to the median filter, it is possible to leave the shape of a sudden change caused by other than noise. Furthermore, in the median filter with threshold, in a case where a threshold is set to very high, the result is the same as that obtained from the moving average filter. Furthermore, in the median filter with threshold, in a case where a threshold is set to zero, an input value is returned without any change.

3-1-6. Gaussian filter with threshold

The Gaussian filter with threshold is a Gaussian filter in which a threshold has been set. Moreover, in the Gaussian filter with threshold, as compared to the Gaussian filter, it is possible to leave the shape of a sudden change caused by other than noise. Furthermore, in the Gaussian filter with threshold, in a case where a threshold is set to very high, the result is the same as that obtained from the Gaussian filter. Furthermore, in the Gaussian filter with threshold, in a case where a threshold is set to zero, an input value is returned without any change.

3-2. First application effect of smoothing filter

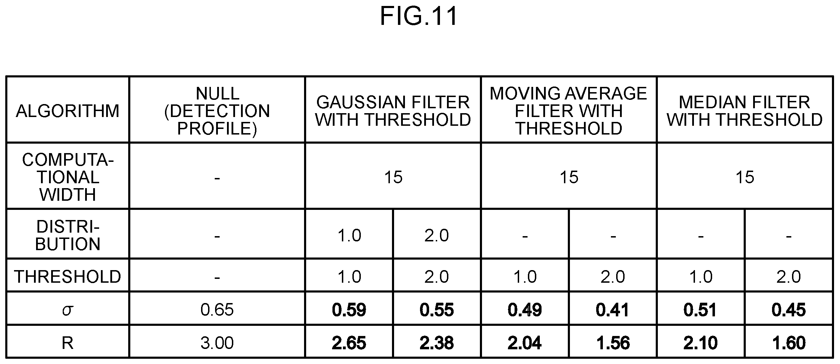

A first application effect of the smoothing filter applied to the coating amount measurement system 100 will be described with reference to FIG. 10 and FIG. 11. In the following, as the first application effect of the smoothing filter, the outline of the detection profile $P_0$ will be described first, and then, an application result of the smoothing filter applied to the detection profile $P_0$ will be described.

3-2-1. Outline of detection profile $P_0$

The outline of the detection profile $P_0$ will be described with reference to FIG. 10. FIG. 10 is a diagram illustrating a first specific example of each of the processes performed in the coating amount measurement system 100 according to the embodiment. As indicated by the example illustrated in FIG. 10, the detection profile $P_0$ is data that includes a "basis weight" that indicates a weight $[g/m^2]$ per unit area of the electrode sheet S and a "detection position" that indicates a position at which the basis weight has been detected. In the example illustrated in FIG. 10, the detection profile $P_0$ is in a range of 0 to 600 mm in the CD direction of the electrode sheet S, and is also in a range of -20 to 100 $g/m^2$ of the basis weight of the electrode sheet S. Furthermore, a "ridge line portion" illustrated in FIG. 10 is data on the detection profile $P_0$ corresponding to the top level of the electrode sheet S having a difference in levels, that is, data on the detection profile $P_0$ corresponding to the maximum thickness or the maximum basis weight, and the number of data points is 210.

3-2-2. Application result obtained from smoothing filter with respect to detection profile $P_0$

An application result obtained from the smoothing filter applied to the detection profile $P_0$ will be described with reference to FIG. 11. FIG. 11 is a diagram illustrating a second specific example of each of the processes performed in the coating amount measurement system 100 according to the embodiment. In the following, each of the application results obtained from a Gaussian filter with threshold, a moving average filter with threshold, and a median filter with threshold applied to the data on the above described "ridge line portion" illustrated in FIG. 10 will be described.

3-2-2-1. Without smoothing filter

The item of "null (detection profile)" illustrated in FIG. 11 indicates a value of each of the standard deviation $\sigma$ and the range R obtained in a case where a smoothing filter is not applied to the data on the above described "ridge line portion" described above illustrated in FIG. 10. As indicated by the item of "null (detection profile)" illustrated in FIG. 11, the standard deviation $\sigma$ is "0.65", and the range R is "3.00".

3-2-2-2. Gaussian filter with threshold

The item of "Gaussian filter with threshold" illustrated in FIG. 11 indicates a value of each of the standard deviation σ and the range R obtained in a case where a Gaussian filter with threshold is applied to both of the CD smoothing process and the MD smoothing process that are performed on the data on the "ridge line portion" described above illustrated in FIG. 10. As indicated by the item of "Gaussian filter with threshold" illustrated in FIG. 11, in a case where the computational width is "15", the distribution is "1.0", and the threshold is "1.0", the standard deviation σ is "0.59", and the range R is "2.65". Furthermore, similarly, in a case where the computational width is "15", the distribution is "2.0" and the threshold is "2.0", the standard deviation σ is "0.55", and the range R is "2.38".

As the application result obtained from the Gaussian filter with threshold described above, both of the values of the standard deviation σ and the range R decrease as compared to a case of the detection profile $P_0$ that is not subjected to smoothing.

### 3-2-2-3. Moving average filter with threshold

The item of "moving average filter with threshold" illustrated in FIG. 11 indicates a value of each of the standard deviation σ and the range R obtained in a case where a moving average filter with threshold is applied to both of the CD smoothing process and the MD smoothing process that are performed on the data on the "ridge line portion" described above illustrated in FIG. 10. As indicated by the item of "moving average filter with threshold" illustrated in FIG. 11, in a case where the computational width is "15" and the threshold is "1.0", the standard deviation σ is "0.49" and the range R is "2.04". Furthermore, similarly, in a case where the computational width is "15" and the threshold is "2.0", the standard deviation σ is "0.41" and the range R is "1.56".

As the application result obtained from the moving average filter with threshold, both of the values of the standard deviation σ and the range R decrease as compared to a case of the detection profile $P_0$ that is not subjected to smoothing.

### 3-2-2-4. Median filter with threshold

The item of "median filter with threshold" illustrated in FIG. 11 indicates a value of each of the standard deviation σ and the range R in a case where a median filter with threshold is applied to both of the CD smoothing process and the MD smoothing process that are performed on the data on the "ridge line portion" described above illustrated in FIG. 10. As indicated by the item of "median filter with threshold" illustrated in FIG. 11, in a case where the computational width is "15" and the threshold is "1.0", the standard deviation σ is "0.51" and the range R is "2.10". Furthermore, similarly, in a case where the computational width is "15" and the threshold is "2.0", the standard deviation σ is "0.45" and the range R is "1.60".

As the application result obtained from the median filter with threshold, both of the values of the standard deviation σ and the range R decrease as compared to a case of the detection profile $P_0$ that is not subjected to smoothing.

### 3-3. Second application effect of smoothing filter

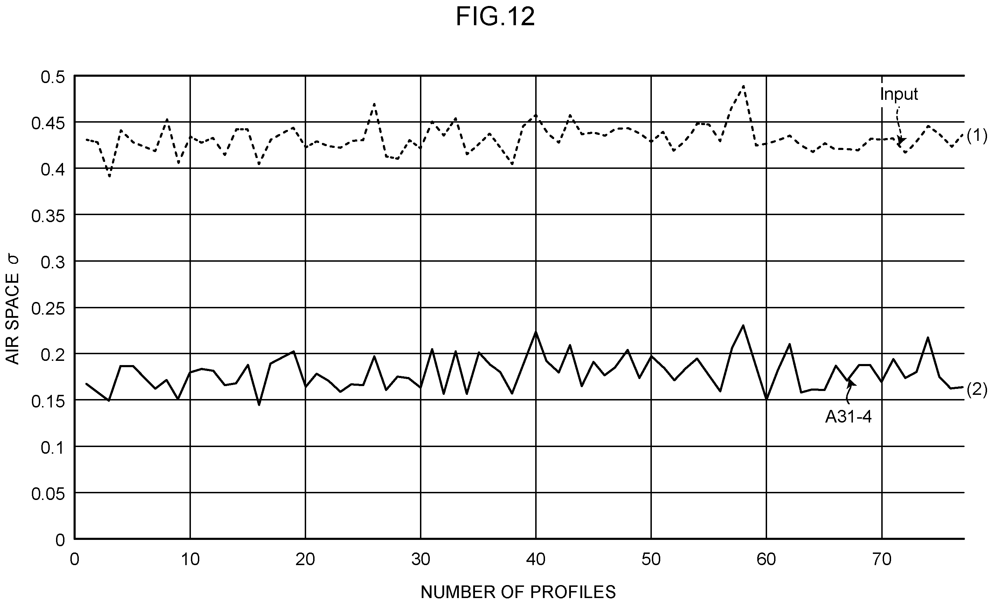

A second application effect of the smoothing filter applied to the coating amount measurement system 100 will be described with reference to FIG. 12 to FIG. 15. In the following, as the second application effect of the smoothing filter, an application result (the standard deviation σ in the air space, the range R in the air space, the standard deviation σ in the ridge line portion, and the range R in the ridge line portion) obtained from the smoothing filter in a case where only the CD smoothing process is performed on the detection profile $P_0$ will be described. Moreover, in the application result obtained from the smoothing filter described below, the number of data points per single profile is 2400, and the number of profiles is 77.

### 3-3-1. Standard deviation σ in air space

As the application result obtained from the smoothing filter used when only the CD smoothing process is performed on the detection profile $P_0$, the standard deviation σ in air space will be described with reference to FIG. 12. FIG. 12 is a diagram illustrating a third specific example of each of the processes performed in the coating amount measurement system 100 according to the embodiment.

The vertical axis illustrated in FIG. 12 indicates the standard deviation σ of the detection value $D_0$ or the first smoothing detection value $D_1$ in the air space in which the electrode sheet S is not present. The horizontal axis illustrated in FIG. 12 indicates the number of profiles, that is, a time series. The diagram indicated by (1) illustrated in FIG. 12 indicates a time series variation in the standard deviation σ of the detection values $D_0$ that are included in the detection profile $P_0$. The diagram indicated by (2) illustrated in FIG. 12 indicates a time series variation in the standard deviation σ of the first smoothing detection values $D_1$ that are included in the CD smoothing profile $P_1$ obtained in a case where only the CD smoothing process is performed.

As indicated by (1) illustrated in FIG. 12, the standard deviation σ of the detection values $D_0$ included in the detection profile $P_0$ is transitioned in the range of 0.39 to 0.48, and does not decrease even when the number of profiles increases.

As indicated by (2) illustrated in FIG. 12, the standard deviation $\sigma$ of the first smoothing detection values $D_1$ included in the CD smoothing profile $P_1$ is transitioned in the range of 0.15 to 0.21, and does not decrease even when the number of profiles increases.

As described above, in a case where only the CD smoothing process is performed on the detection profile $P_0$, the standard deviation $\sigma$ in the air space does not decrease in accordance with accumulation of the past data, but the value becomes small as compared to the detection profile $P_0$ that is not subjected to the smoothing process.

Moreover, the example illustrated in FIG. 12 indicates the application result obtained from the moving average filter with threshold (the computational width of 31 and the threshold of 4.0), but even in a case where the other smoothing filter of the median filter with threshold, the Gaussian filter with threshold, or the like is applied, the value similarly becomes small as compared to a case of the detection profile $P_0$ that is not subjected to the smoothing process.

3-3-2. Range R in air space

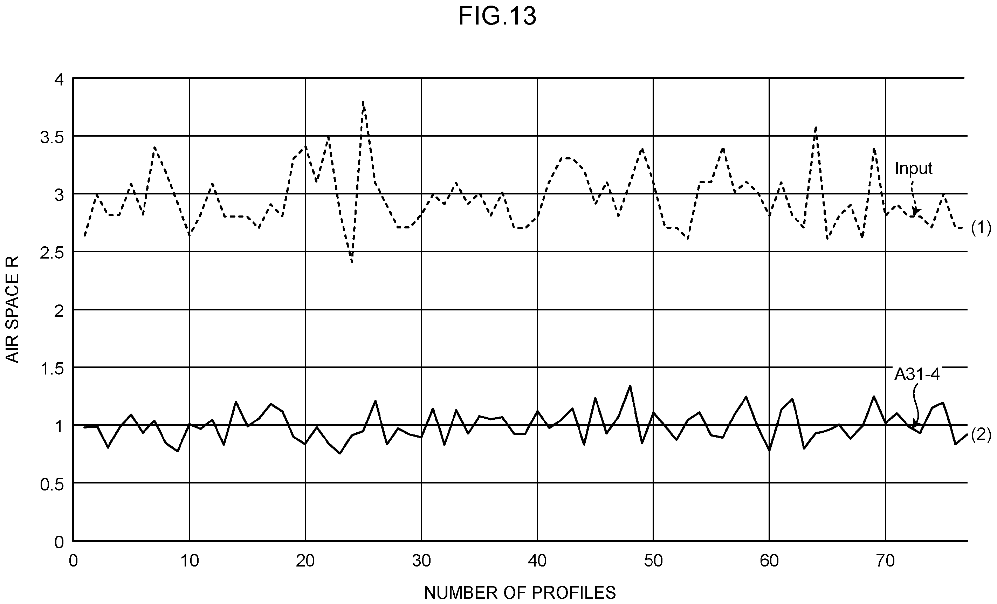

As the application result obtained from the smoothing filter used when only the CD smoothing process is performed on the detection profile $P_0$, the range R in air space will be described with reference to FIG. 13. FIG. 13 is a diagram illustrating a fourth specific example of each of the processes performed in the coating amount measurement system 100 according to the embodiment.

The vertical axis illustrated in FIG. 13 indicates the range R of the detection values $D_0$ or the first smoothing detection values $D_1$ in the air space in which the electrode sheet S is not present. The horizontal axis illustrated in FIG. 13 indicates the number of profiles, that is, a time series. The diagram indicated by (1) illustrated in FIG. 13 indicates a time series variation in the range R of the detection values $D_0$ that are included in the detection profile $P_0$. The diagram indicated by (2) illustrated in FIG. 13 indicates a time series variation in the range R of the first smoothing detection values $D_1$ that are included in the CD smoothing profile $P_1$ obtained in a case where only the CD smoothing process is performed.

As indicated by (1) illustrated in FIG. 13, the range R of the detection values $D_0$ included in the detection profile $P_0$ is transitioned in the range of 2.4 to 3.8, and does not decrease even when the number of profiles increases.

As indicated by (2) illustrated in FIG. 13, the range R of the first smoothing detection values $D_1$ included in the CD smoothing profile $P_1$ is transitioned in the range of 0.7 to 1.3, and does not decrease even when the number of profiles increases.

As described above, in a case where only the CD smoothing process is performed on the detection profile $P_0$, the range R in the air space does not decrease in accordance with accumulation of the past data, but the value becomes small as compared to the detection profile $P_0$ that is not subjected to the smoothing process.

Moreover, the example illustrated in FIG. 13 indicates the application result obtained from the moving average filter with threshold (the computational width of 31 and the threshold of 4.0), but even in a case where the other smoothing filter of the median filter with threshold, the Gaussian filter with threshold, or the like is applied, the value similarly becomes small as compared to a case of the detection profile $P_0$ that is not subjected to the smoothing process.

3-3-3. Standard deviation $\sigma$ of ridge line portion

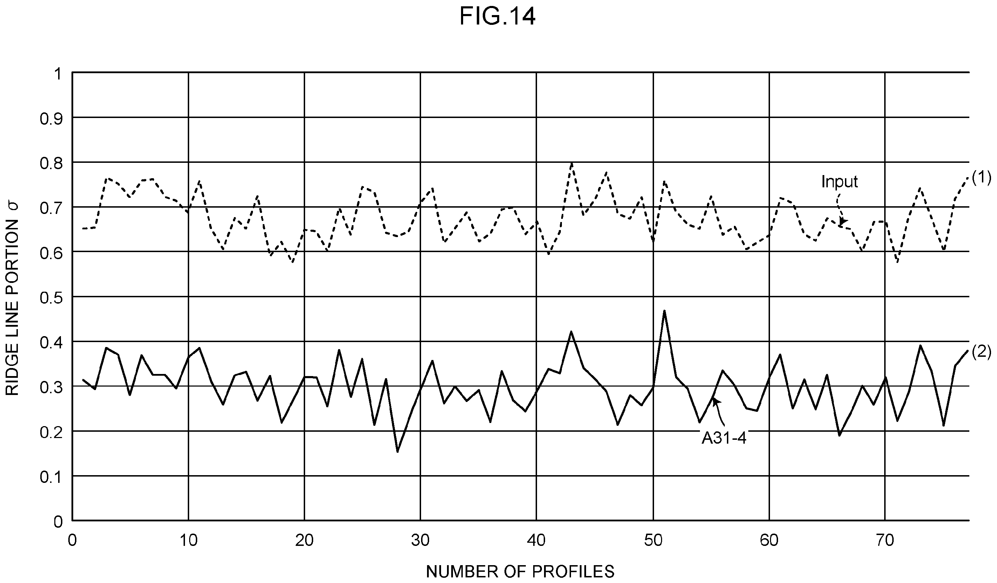

As the application result obtained from the smoothing filter used when only the CD smoothing process is performed on the detection profile $P_0$, the standard deviation $\sigma$ of the ridge line portion will be described with reference to FIG. 14. FIG. 14 is a diagram illustrating a fifth specific example of each of the processes performed in the coating amount measurement system 100 according to the embodiment.

The vertical axis illustrated in FIG. 14 indicates the standard deviation $\sigma$ of the detection values $D_0$ or the first smoothing detection values $D_1$ in the ridge line portion corresponding to the area in which the thickness or the basis weight of the electrode sheet S is the maximum. The horizontal axis illustrated in FIG. 14 indicates the number of profiles, that is, a time series. The diagram indicated by (1) illustrated in FIG. 14 indicates a time series variation in the standard deviation $\sigma$ of the detection values $D_0$ that are included in the detection profile $P_0$. The diagram indicated by (2) illustrated in FIG. 14 indicates a time series variation in the standard deviation $\sigma$ of the first smoothing detection values $D_1$ that are included in the CD smoothing profile $P_1$ obtained in a case where only the CD smoothing process is performed.

As indicated by (1) illustrated in FIG. 14, the standard deviation $\sigma$ of the detection values $D_0$ included in the detection profile $P_0$ is transitioned in the range of 0.58 to 0.80, and does not decrease even when the number of profiles increases.

As indicated by (2) illustrated in FIG. 14, the standard deviation $\sigma$ of the first smoothing detection values $D_1$ included in the CD smoothing profile $P_1$ is transitioned in the range of 0.15 to 0.48, and does not decrease even when the number of profiles increases.

As described above, in a case where only the CD smoothing process is performed on the detection profile $P_0$, the standard deviation $\sigma$ in the ridge line portion does not decrease in accordance with accumulation of the past data, but the value becomes small as compared to the detection profile $P_0$ that is not subjected to the smoothing process.

Moreover, the example illustrated in FIG. 14 indicates the application result obtained from the moving average filter with threshold (the computational width of 31 and the threshold of 4.0) (A31-4), but even in a case where the other smoothing filter of the median filter with threshold, the Gaussian filter with threshold, or the like is applied, the value similarly becomes small as compared to a case of the detection profile $P_0$ that is not subjected to the smoothing process.

3-3-4. Range R of ridge line portion

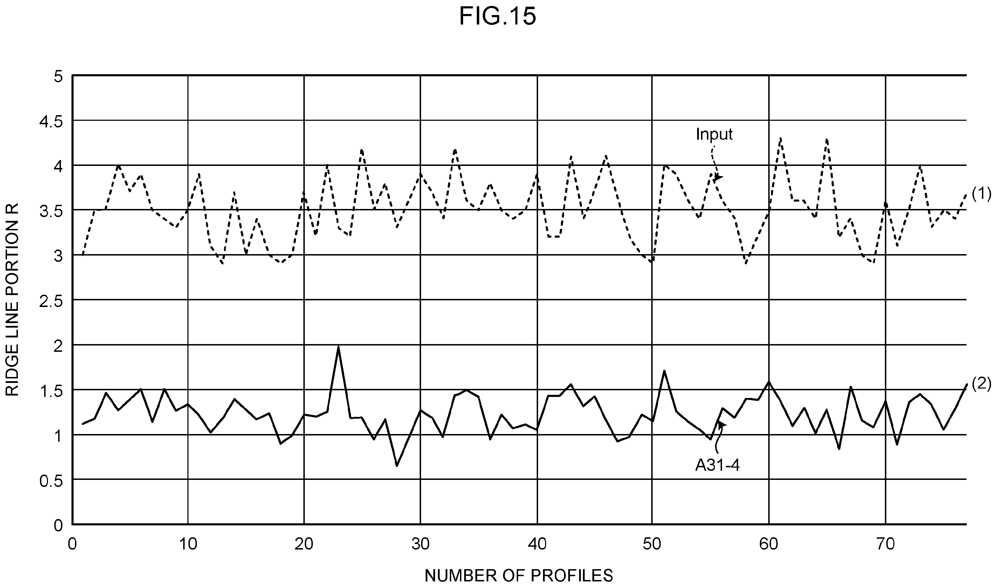

As the application result obtained from the smoothing filter used when only the CD smoothing process is performed on the detection profile $P_0$, the range R of the ridge line portion will be described with reference to FIG. 15. FIG. 15 is a diagram illustrating a sixth specific example of each of the processes performed in the coating amount measurement system 100 according to the embodiment.

The vertical axis illustrated in FIG. 15 indicates the range R of the detection values $D_0$ or the first smoothing detection values $D_1$ in the ridge line portion corresponding to the area in which the thickness or the basis weight of the electrode sheet S is the maximum. The horizontal axis illustrated in FIG. 15 indicates the number of profiles, that is, a time series. The diagram indicated by (1) illustrated in FIG. 15 indicates a time series variation in the range R of the detection values $D_0$ that are included in the detection profile $P_0$. The diagram indicated by (2) illustrated in FIG. 15 indicates a time series variation in the range R of the first smoothing detection values $D_1$ that are included in the CD smoothing profile $P_1$ obtained in a case where only the CD smoothing process is performed.

As indicated by (1) illustrated in FIG. 15, the range R of the detection values $D_0$ included in the detection profile $P_0$ is transitioned in the range of 2.9 to 4.3, and does not decrease even when the number of profiles increases.

As indicated by (2) illustrated in FIG. 15, the range R of the first smoothing detection values $D_1$ included in the CD smoothing profile $P_1$ is transitioned in the range of 0.6 to 2.0, and does not decrease even when the number of profiles increases.

As described above, in a case where only the CD smoothing process is performed on the detection profile $P_0$, the range R in the ridge line portion does not decrease in accordance with accumulation of the past data, but the value becomes small as compared to the detection profile $P_0$ that is not subjected to the smoothing process.

Moreover, the example illustrated in FIG. 15 indicates the application result obtained from the moving average filter with threshold (the computational width of 31 and the threshold of 4.0) (A31-4), but even in a case where the other smoothing filter of the median filter with threshold, the Gaussian filter with threshold, or the like is applied, the value similarly becomes small as compared to a case of the detection profile $P_0$ that is not subjected to the smoothing process.

3-3-5. Summary of second application effect

As described above, in a case where only the CD smoothing process is performed on the detection profile $P_0$, each of the standard deviation $\sigma$ in the air space, the range R in the air space, the standard deviation $\sigma$ in the ridge line portion, and the range R in the ridge line portion does not decrease in accordance with accumulation of the past data, but the value becomes small as compared to the detection profile $P_0$ that is not subjected to the smoothing process. Therefore, in the coating amount measurement system 100, it is possible to reduce the value of the standard deviation $\sigma$ or the range R by performing only the CD smoothing process on the detection profile $P_0$, which makes it possible to improve the measurement accuracy of the thickness or the basis weight.

3-4. Third application effect of smoothing filter

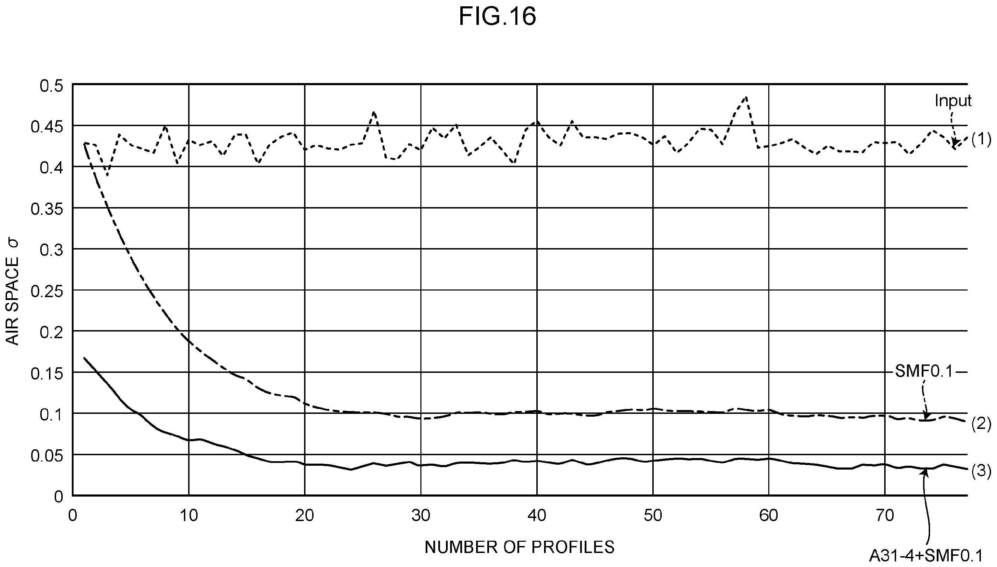

A third application effect of the smoothing filter used in the coating amount measurement system 100 will be described with reference to FIG. 16 to FIG. 19. In the following, as the third application effect of the smoothing filter, an application result (the standard deviation $\sigma$ in the air space, the range R in the air space, the standard deviation $\sigma$ in the ridge line portion, and the range R in the ridge line portion) obtained from the smoothing filter in a case where the CD smoothing process and the MD smoothing process are performed on the detection profile $P_0$ will be described. Moreover, in the application result obtained from the smoothing filter described below, the number of data points per single profile is 2400, and the number of profiles is 77.

3-4-1. Standard deviation $\sigma$ in air space

As the application result obtained from the smoothing filter used when the CD smoothing process and the MD smoothing process are performed on the detection profile $P_0$, the standard deviation $\sigma$ in the air space will be described with reference to FIG. 16. FIG. 16 is a diagram illustrating a seventh specific example of each of the processes performed in the coating amount measurement system 100 according to the embodiment.

The vertical axis illustrated in FIG. 16 indicates the standard deviation $\sigma$ of the detection values $D_0$, an exponential smoothing detection values $D_1$', or the second smoothing detection values $D_2$ in the air space in which the electrode sheet S is not present. The horizontal axis illustrated in FIG. 16 indicates the number of profiles, that is, a time series. The diagram indicated by (1) illustrated in FIG. 16 indicates a time series variation in the standard deviation $\sigma$ of the detection values $D_0$ that are included in the detection profile $P_0$. The diagram indicated by (2) illustrated in FIG. 16 indicates a time series variation in the standard deviation $\sigma$ of the exponential smoothing detection values $D_1$' included in the exponential smoothing profile $P_1$' obtained in a case where only the MD smoothing process (SMF0.1) is performed by using the exponential smoothing method. The diagram indicated by (3) illustrated in FIG. 16 indicates a time series variation in the standard deviation $\sigma$ of the second smoothing detection values $D_2$ included in the MD smoothing profile $P_2$ obtained in a case where the CD smoothing process and the MD smoothing process are performed.

As indicated by (1) illustrated in FIG. 16, the standard deviation $\sigma$ of the detection values $D_0$ included in the detection profile $P_0$ is transitioned in the range of 0.39 to 0.48, and does not decrease even when the number of profiles increases.

As indicated by (2) illustrated in FIG. 16, the standard deviation $\sigma$ of the exponential smoothing detection values $D_1$' included in the exponential smoothing profile $P_1$' is 0.43 when the number of profiles is one, decreases as the number of profiles increases, and becomes 0.09 when the number of profiles is about 30, and then, becomes constant after that.

As indicated by (3) illustrated in FIG. 16, the standard deviation $\sigma$ of the second smoothing detection values $D_2$ included in the MD smoothing profile $P_2$ is 0.17 when the number of profiles is one, decreases as the number of profiles increases, and becomes 0.04 when the number of profiles is about 20, and then, becomes constant after that.

As described above, in a case where the CD smoothing process and the MD smoothing process are performed on the detection profile $P_0$, regarding the standard deviation $\sigma$ in the air space, the value becomes small as compared to the detection profile $P_0$ that is not subjected to the smoothing process, decreases in accordance with accumulation of the past data, and also becomes stable as a result of a small amount of past data being accumulated as compared to the exponential smoothing profile $P_1$' obtained when only the MD smoothing process is performed.

Moreover, the example illustrated in FIG. 16 indicates the application result of the moving average filter with threshold (the computational width of 31 and the threshold of 4.0) (A31-4) and the exponential smoothing method (SMF0.1), but, even in a case where the other smoothing filter of the median filter with threshold, the Gaussian filter with threshold, or the like is applied, the value similarly becomes small as compared to a case of the detection profile $P_0$ that is not subjected to the smoothing process, and the value becomes stable as a result of a small amount of past data being accumulated as compared to the exponential smoothing profile $P_1$' obtained when only the MD smoothing process is performed.

3-4-2. Range R in air space

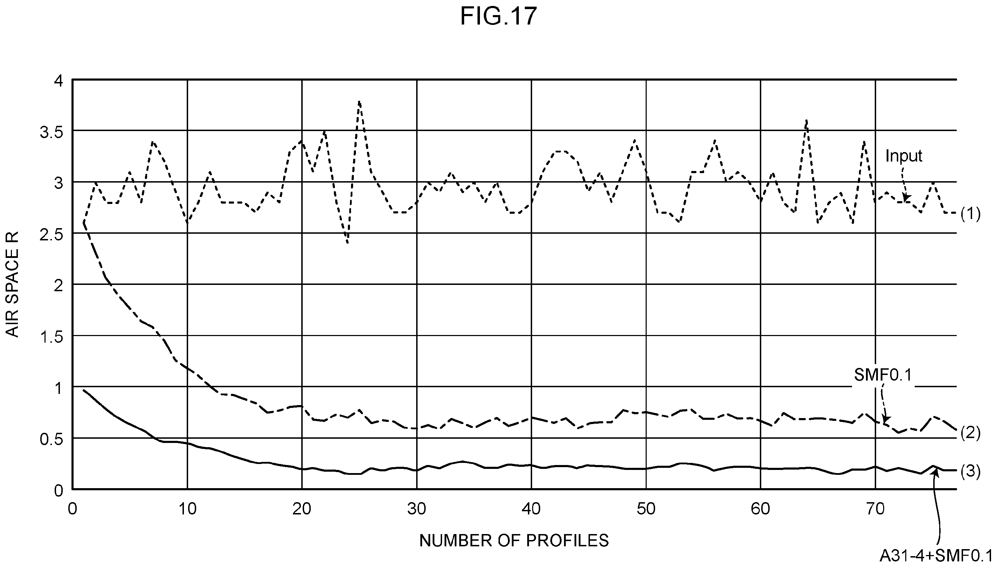

As the application result obtained from the smoothing filter used when the CD smoothing process and the MD smoothing process are performed on the detection profile $P_0$, the range R in the air space will be described with reference to FIG. 17. FIG. 17 is a diagram illustrating an eighth specific example of each of the processes performed in the coating amount measurement system 100 according to the embodiment.

The vertical axis illustrated in FIG. 17 indicates the range R of the detection values $D_0$, the exponential smoothing detection values $D_1$', or the second smoothing detection values $D_2$ in the air space in which the electrode sheet S is not present. The horizontal axis illustrated in FIG. 17 indicates the number of profiles, that is, a time series. The diagram indicated by (1) illustrated in FIG. 17 indicates a time series variation in the range R of the detection values $D_0$ included in the detection profile $P_0$. The diagram indicated by (2) illustrated in FIG. 17 indicates a time series variation in the range R of the exponential smoothing detection values $D_1$' included in the exponential smoothing profile $P_1$' obtained in a case where only the MD smoothing process (SMF0.1) is performed by using the exponential smoothing method. The diagram indicated by (3) illustrated in FIG. 17 indicates a time series variation in the range R of the second smoothing detection values $D_2$ included in the MD smoothing profile $P_2$ obtained in a case where the CD smoothing process and the MD smoothing process are performed.

As indicated by (1) illustrated in FIG. 17, the range R of the detection values $D_0$ included in the detection profile $P_0$ is transitioned in the range of 2.4 to 3.8, and does not decrease even when the number of profiles increases.

As indicated by (2) illustrated in FIG. 17, the range R of the exponential smoothing detection values $D_1$' included in the exponential smoothing profile $P_1$' is 2.6 when the number of profiles is one, decreases as the number of profiles increases, and becomes 0.6 when the number of profiles is about 30, and then, becomes constant after that.

As indicated by (3) illustrated in FIG. 17, the range R of the second smoothing detection values $D_2$ included in the MD smoothing profile $P_2$ is 0.9 when the number of profiles is one, decreases as the number of profiles increases, and becomes 0.2 when the number of profiles is about 20, and then, becomes constant after that.

As described above, in a case where the CD smoothing process and the MD smoothing process are performed on the detection profile $P_0$, regarding the range R in the air space, the value becomes small as compared to the detection

profile $P_0$ that is not subjected to the smoothing process, decreases in accordance with accumulation of the past data, and also becomes stable as a result of a small amount of past data being accumulated as compared to the exponential smoothing profile $P_1'$ obtained when only the MD smoothing process is performed.

Moreover, the example illustrated in FIG. 17 indicates the application result of the moving average filter with threshold (the computational width of 31 and the threshold of 4.0) (A31-4) and the exponential smoothing method (SMF0.1), but, even in a case where the other smoothing filter of the median filter with threshold, the Gaussian filter with threshold, or the like is applied, the value similarly becomes small as compared to a case of the detection profile $P_0$ that is not subjected to the smoothing process, and the value becomes stable as a result of a small amount of past data being accumulated as compared to the exponential smoothing profile $P_1'$ obtained when only the MD smoothing process is performed.

3-4-3. Standard deviation $\sigma$ of ridge line portion

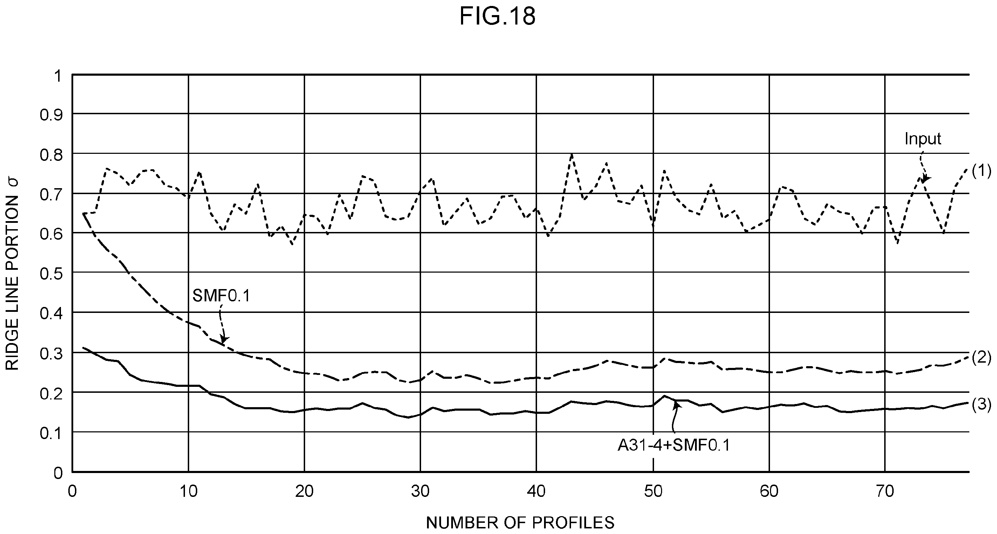

As the application result obtained from the smoothing filter used when the CD smoothing process and the MD smoothing process are performed on the detection profile $P_0$, the standard deviation $\sigma$ of the ridge line portion will be described with reference to FIG. 18. FIG. 18 is a diagram illustrating a ninth specific example of each of the processes performed in the coating amount measurement system 100 according to the embodiment.

The vertical axis illustrated in FIG. 18 indicates the standard deviation $\sigma$ of the detection values $D_0$, the exponential smoothing detection values $D_1'$, or the second smoothing detection values $D_2$ in the ridge line portion corresponding to the area in which the thickness or the basis weight of the electrode sheet S is the maximum. The horizontal axis illustrated in FIG. 18 indicates the number of profiles, that is, a time series. The diagram indicated by (1) illustrated in FIG. 18 indicates a time series variation in the standard deviation $\sigma$ of the detection values $D_0$ included in the detection profile $P_0$. The diagram indicated by (2) illustrated in FIG. 18 indicates a time series variation of the standard deviation $\sigma$ of the exponential smoothing detection values $D_1'$ included in the exponential smoothing profile $P_1'$ obtained in a case where only the MD smoothing process (SMF 0.1) is performed by using the exponential smoothing method. The diagram indicated by (3) illustrated in FIG. 18 indicates a time series variation of the standard deviation $\sigma$ of the second smoothing detection values $D_2$ included in the MD smoothing profile $P_2$ obtained in a case where the CD smoothing process and the MD smoothing process are performed.

As indicated by (1) illustrated in FIG. 18, the standard deviation $\sigma$ of the detection values $D_0$ included in the detection profile $P_0$ is transitioned in the range of 0.58 to 0.80, and does not decrease even when the number of profiles increases.

As indicated by (2) illustrated in FIG. 18, the standard deviation $\sigma$ of the exponential smoothing detection values $D_1'$ included in the exponential smoothing profile $P_1'$ is 0.65 when the number of profiles is one, decreases as the number of profiles increases, and becomes 0.24 when the number of profiles is about 30, and then, becomes constant after that.

As indicated by (3) illustrated in FIG. 18, the standard deviation $\sigma$ of the second smoothing detection values $D_2$ included in the MD smoothing profile $P_2$ is 0.31 when the number of profiles is one, decreases as the number of profiles increases, and becomes 0.15 when the number of profiles is about 20, and then, becomes constant after that.

As described above, in a case where the CD smoothing process and the MD smoothing process are performed on the detection profile $P_0$, regarding the standard deviation $\sigma$ in the ridge line portion, the value becomes small as compared to the detection profile $P_0$ that is not subjected to the smoothing process, decreases in accordance with accumulation of the past data, and also becomes stable as a result of a small amount of past data being accumulated as compared to the exponential smoothing profile $P_1'$ obtained when only the MD smoothing process is performed.

Moreover, the example illustrated in FIG. 18 indicates the application result of the moving average filter with threshold (the computational width of 31 and the threshold of 4.0) (A31-4) and the exponential smoothing method (SMF0.1), but, even in a case where the other smoothing filter of the median filter with threshold, the Gaussian filter with threshold, or the like is applied, the value similarly becomes small as compared to a case of the detection profile $P_0$ that is not subjected to the smoothing process, and the value becomes stable as a result of a small amount of past data being accumulated as compared to the exponential smoothing profile $P_1'$ obtained when only the MD smoothing process is performed.

3-4-4. range R in ridge line portion

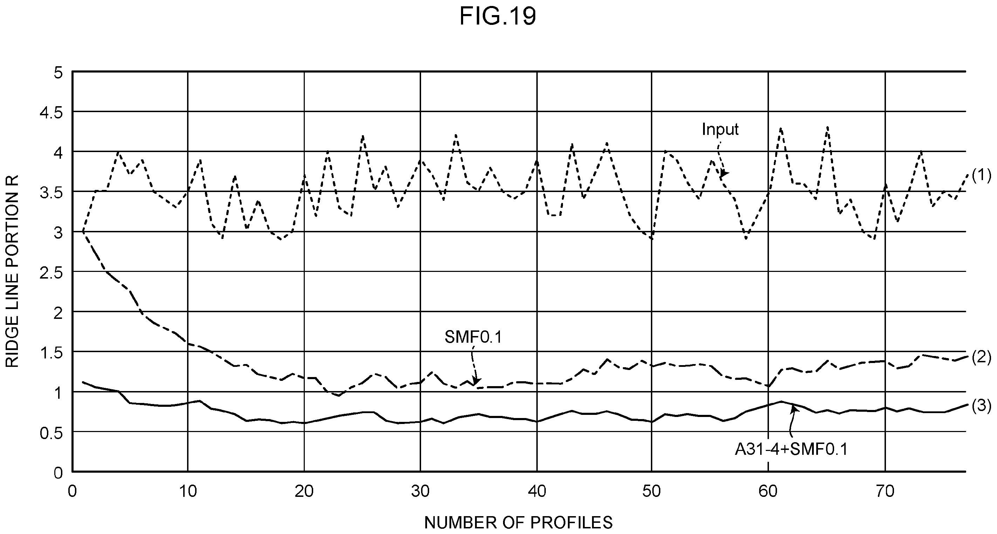

As the application result obtained from the smoothing filter used when the CD smoothing process and the MD smoothing process performed on the detection profile $P_0$, the range R in the ridge line portion will be described with reference to FIG. 19. FIG. 19 is a diagram illustrating a tenth specific example of each of the processes performed in the coating amount measurement system 100 according to the embodiment.

The vertical axis illustrated in FIG. 19 indicates the range R of the detection values $D_0$, the exponential smoothing detection value $D_1'$, or the second smoothing detection value $D_2$ in the ridge line portion corresponding to the area in which the thickness or the basis weight of the electrode sheet S is the maximum. The horizontal axis illustrated in FIG. 19 indicates the number of profiles, that is, a time series. The diagram indicated by (1) illustrated in FIG. 19 indicates a time series variation in the range R of the detection values $D_0$ included in the detection profile $P_0$. The diagram indicated by (2) illustrated in FIG. 19 indicates a time series variation in the range R of the exponential smoothing detection values $D_1$' included in the exponential smoothing profile $P_1$' obtained in a case where only the MD smoothing process (SMF 0.1) is performed by using the exponential smoothing method. The diagram indicated by (3) illustrated in FIG. 19 indicates a time series variation in the range R of the second smoothing detection values $D_2$ included in the MD smoothing profile $P_2$ in a case where the CD smoothing process and the MD smoothing process are performed.

As indicated by (1) illustrated in FIG. 19, the range R of the detection values $D_0$ included in the detection profile $P_0$ is transitioned in the range of 2.9 to 4.3, and does not decrease even when the number of profiles increases.

As indicated by (2) illustrated in FIG. 19, the range R of the exponential smoothing detection values $D_1$' included in the exponential smoothing profile $P_1$' is 3.0 when the number of profiles is one, decreases as the number of profiles increases, and becomes 1.1 when the number of profiles is about 30, and then, becomes constant after that.

As indicated by (3) illustrated in FIG. 19, the range R of the second smoothing detection values $D_2$ included in the MD smoothing profile $P_2$ is 1.1 when the number of profiles is one, decreases as the number of profiles increases, and becomes 0.6 when the number of profiles is about 20, and then, becomes constant after that.

As described above, in a case where the CD smoothing process and the MD smoothing process are performed on the detection profile $P_0$, regarding the range R in the ridge line portion, the value becomes small as compared to the detection profile $P_0$ that is not subjected to the smoothing process, decreases in accordance with accumulation of the past data, and also becomes stable as a result of a small amount of past data being accumulated as compared to the exponential smoothing profile $P_1$' obtained when only the MD smoothing process is performed.

Moreover, the example illustrated in FIG. 19 indicates the application result of the moving average filter with threshold (computational width 31, threshold 4.0) (A31-4) and the exponential smoothing method (SMF0.1), but, even in a case where the other smoothing filter of the median filter with threshold, the Gaussian filter with threshold, or the like is applied, the value similarly becomes small as compared to a case of the detection profile $P_0$ that is not subjected to the smoothing process, and the value becomes stable as a result of a small amount of past data being accumulated as compared to the exponential smoothing profile $P_1$' obtained when only the MD smoothing process is performed.

3-4-5. Summary of third application effect

As described above, in a case where the smoothing process and the MD smoothing process are performed on the detection profile $P_0$, regarding each of the standard deviation σ in the air space, the range R in the air space, the standard deviation σ in the ridge line portion, and the range R in the ridge line portion, the value becomes small as compared to the detection profile $P_0$ that is not subjected to the smoothing process, decreases in accordance with accumulation of the past data, and also becomes stable as a result of a small amount of past data being accumulated as compared to the exponential smoothing profile $P_I$' obtained when only the MD smoothing process is performed. Therefore, in the coating amount measurement system 100, it is possible to reduce the value of the standard deviation σ or the range R by performing the CD smoothing process and the MD smoothing process on the detection profile $P_0$, which makes it possible to improve the measurement accuracy of the thickness or the basis weight.

4. Flow of each process performed in coating amount measurement system 100

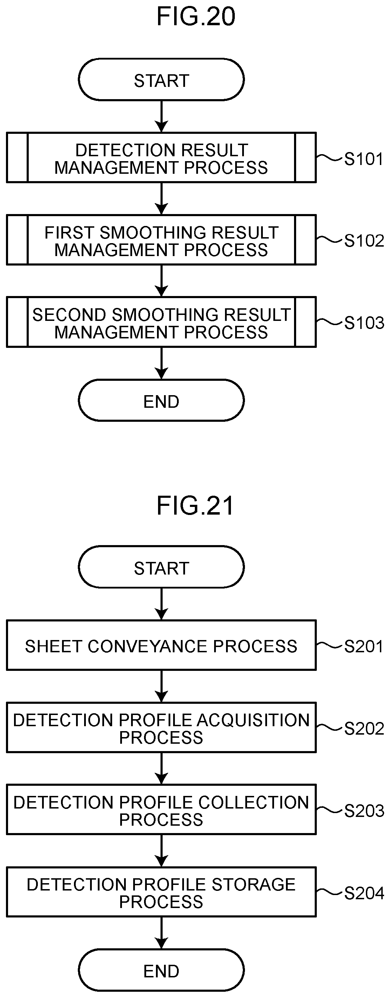

The flow of the processes performed in the coating amount measurement system 100 according to the embodiment will be described with reference to FIG. 20 to FIG. 23. In the following, the flow of the overall process performed in the coating amount measurement system 100 will be described first, and then, as each of the processes, a detection result management process, a first smoothing result management process, and a second smoothing result management process will be described.

4-1. Overall process of coating amount measurement system 100

The overall process performed in the coating amount measurement system 100 according to the embodiment will be described with reference to FIG. 20. FIG. 20 is a flowchart illustrating one example of the flow of the overall process performed in the coating amount measurement system 100 according to the embodiment. Moreover, the processes performed at Steps S101 to S103 described below may be performed in different order. Furthermore, some of the processes performed at Steps S101 to S103 described below may be omitted.

4-1-1. Detection result management process

At a first step, the coating amount measurement system 100 performs the detection result management process (Step S101). For example, the coating amount measurement system 100 manages, as the detection result, the n detection profiles $P_0$ about the conveyed electrode sheet S by performing the processes that are performed at Steps S201 to S204 and that will be described later.

4-1-2. First smoothing result management process

At a second step, the coating amount measurement system 100 performs the first smoothing result management process (Step S102). For example, the coating amount measurement system 100 manages, as the first smoothing result, the CD smoothing profile $P_1$ obtained by smoothing the detection profile $P_0$ in the CD direction by performing the processes that are performed Steps S301 to S303 and that will be described later.

4-1-3. Second smoothing result management process

At a third step, the coating amount measurement system 100 performs the second smoothing result management process (Step S103). For example, the coating amount measurement system 100 manages, as the second smoothing result, the MD smoothing profile $P_2$ obtained by smoothing the CD smoothing profile $P_1$ in the MD direction by performing the processes that are performed at Steps S401 to S403 and that will be described later.

4-2. Detection result management process

The flow of the detection result management process performed in the coating amount measurement system 100 according to the embodiment will be described with reference to FIG. 21. FIG. 21 is a flowchart illustrating one example of the flow of the detection result management process performed in the coating amount measurement system 100 according to the embodiment. Moreover, the processes performed at Steps S201 to S204 described below may be performed in different order. Furthermore, some of the processes performed at Steps S201 to S204 described below may be omitted.

4-2-1. Sheet conveyance process

At a first step, the worker W performs the sheet conveyance process (Step S201). For example, the worker W conveys the electrode sheet S at a constant speed by operating the roller that is the conveyance device provided in the coating line.

4-2-2. Detection profile acquisition process

At a second step, the detection device 20 performs the detection profile acquisition process (Step S202). For example, the detection device 20 detects the detection value $D_0$ that is the thickness or the basis weight of the conveyed electrode sheet S, and acquires the detection profile $P_0$ including the m detection values $D_0$ in the CD direction.

4-2-3. Detection profile collection process

At a third step, the measurement apparatus 10 performs the detection profile collection process (Step S203). For example, the measurement apparatus 10 acquires, from the detection device 20, n detection profiles $P_0$ (1), $P_0$ (2), $P_0$ (3), ... , and $P_0$ (n) for each movement of the detection device 20 back and forth one-half times in the MD direction.

4-2-4. Detection profile storage process

At a fourth step, the measurement apparatus 10 performs the detection profile storage process (Step S204). For example, the measurement apparatus 10 stores the collected detection profiles $P_0$ in the detection result storage unit 14a.

4-3. First smoothing result management process

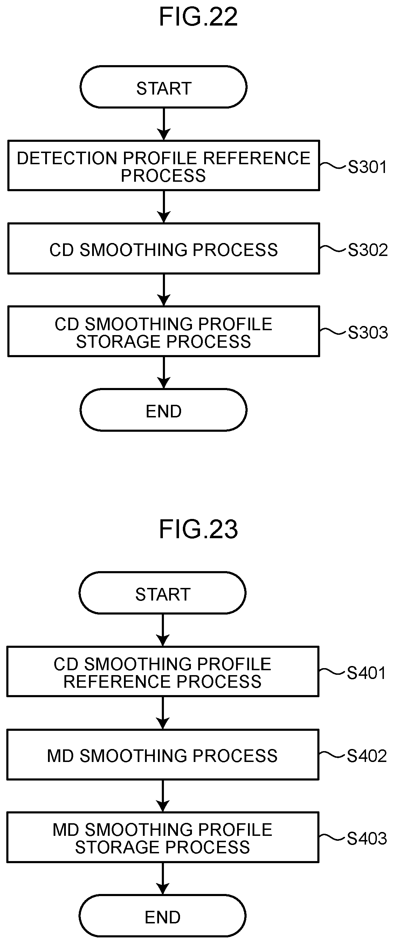

The flow of the first smoothing result management process performed in the coating amount measurement system 100 according to the embodiment will be described with reference to FIG. 22. FIG. 22 is a flowchart illustrating one example of the flow of the first smoothing result management process performed in the coating amount measurement system 100 according to the embodiment. Moreover, the processes performed at Steps S301 to S303 described below may be performed in different order. Furthermore, some of the processes performed at Steps S301 to S303 described below may be omitted.

4-3-1. Detection profile reference process

At a first step, the measurement apparatus 10 performs the detection profile reference process (Step S301). For example, the measurement apparatus 10 refers to the n detection profiles $P_0(1), P_0(2), P_0(3), ...$, and $P_0(n)$ stored in the detection result storage unit 14a.

4-3-2. CD smoothing process

At a second step, the measurement apparatus 10 performs the CD smoothing process (Step S302). For example, the measurement apparatus 10 applies, as the smoothing filter, a moving average filter, a median filter, a Gaussian filter, a moving average filter with threshold, a median filter with threshold, or a Gaussian filter with threshold; performs smoothing on the detection profiles $P_0(1), P_0(2), P_0(3), ...$, and $P_0(n)$ related to the detection values $D_0$ located in the same MD detection position X; and outputs the $P_1(1), P_1(2), P_1(3), ...$, and $P_1(n)$ as the CD smoothing profile $P_1$ each including m pieces of the first smoothing detection values $D_1$.

4-3-3. CD smoothing profile storage process

At a third step, the measurement apparatus 10 performs the CD smoothing profile storage process (Step S303). For example, the measurement apparatus 10 stores the CD smoothing profile $P_1$ that has been subjected to the smoothing in the CD direction in the first smoothing result storage unit 14b.

4-4. Second smoothing result management process

The flow of the second smoothing result management process performed in the coating amount measurement system 100 according to the embodiment will be described with reference to FIG. 23. FIG. 23 is a flowchart illustrating one example of the flow of the second smoothing result management process performed in the coating amount measurement system 100 according to the embodiment. Moreover, the processes performed at Steps S401 to S403 described below may be performed in different order. Furthermore, some of the processes performed at Steps S401 to S403 described below may be omitted.

4-4-1. CD smoothing profile reference process

At a first step, the measurement apparatus 10 performs the CD smoothing profile reference process (Step S401). For example, the measurement apparatus 10 refers to the n CD smoothing profiles $P_1(1), P_1(2), P_1(3), ...$, and $P_1(n)$ stored in the first smoothing result storage unit 14b.

4-4-2. MD smoothing process

At a second step, the measurement apparatus 10 performs the MD smoothing process (Step S402). For example, the measurement apparatus 10 applies, as the smoothing filter, a moving average filter, a median filter, a Gaussian filter, a moving average filter with threshold, a median filter with threshold, or a Gaussian filter with threshold; performs smoothing on the CD smoothing profiles $P_1(1), P_1(2), P_1(3), ...$, and $P_1(n)$ for the first smoothing detection values $D_1$ located in the same CD detection position Y; and outputs $P_2(1), P_2(2), P_2(3), ...$, and $P_2(n)$ as the MD smoothing profile $P_2$ including each of the m second smoothing detection values $D_2$.

4-4-3. MD smoothing profile storage process

At a third step, the measurement apparatus 10 performs the MD smoothing profile storage process (Step S403). For example, the measurement apparatus 10 stores the MD smoothing profile $P_2$ that has been subjected to the smoothing in the MD direction in the second smoothing result storage unit 14c.

5. Effects of embodiment

Lastly, the effects of the embodiment will be described. In the following, a first to a ninth effects corresponding to the processes according to embodiment will be described.

5-1. First effect

As a first effect, in the process according to the embodiment described above, the measurement apparatus 10 collects, from the detection device 20, the detection profile $P_0$ including the plurality of detection values $D_0$ related to the thickness or the basis weight of the measurement object that is to be conveyed and that is in the form of a sheet, and performs smoothing, by using a smoothing filter, on the plurality of detection values $D_0$ included in the detection profile $P_0$ in the CD direction that is perpendicular to the MD direction of the measurement object; and outputs the first smoothing profile $P_1$. As a result of this, in this process, it is possible to improve the measurement accuracy of the thickness or the basis weight.

5-2. Second effect

As a second effect, in the process according to the embodiment described above, the measurement apparatus 10 performs smoothing, by using a smoothing filter, on the plurality of smoothed first smoothing detection values $D_1$ included in the first smoothing profile $P_1$ in the CD direction in the MD direction; and outputs the second smoothing profile $P_2$. As a result of this, in this process, it is possible to further improve the measurement accuracy of the thickness or the basis weight.

5-3. Third effect

As a third effect, in the process according to the embodiment described above, the smoothing filter is a moving average filter. As a result of this, in this process, it is possible to improve the measurement accuracy of the thickness or the basis weight by performing smoothing using the moving average filter.

5-4. Fourth effect

As a fourth effect, in the process according to the embodiment described above, the smoothing filter is a median filter. As a result of this, in this process, it is possible to improve the measurement accuracy of the thickness or the basis weight by performing smoothing using the median filter.

5-5. Fifth effect

As a fifth effect, in the process according to the embodiment described above, the smoothing filter is a Gaussian filter. As a result of this, in this process, it is possible to improve the measurement accuracy of the thickness or the basis weight by performing smoothing using the Gaussian filter.

5-6. Sixth effect

As a sixth effect, in the process according to the embodiment described above, the smoothing filter is a moving average filter with threshold. As a result of this, in this process, it is possible to improve the measurement accuracy of the thickness or the basis weight by performing smoothing using the moving average filter with threshold.

5-7. Seventh effect

As a seventh effect, in the process according to the embodiment described above, the smoothing filter is a median filter with threshold. As a result of this, in this process, it is possible to improve the measurement accuracy of the thickness or the basis weight by performing smoothing using the median filter with threshold.

5-8. Eighth effect

As an eighth effect, in the process according to the embodiment described above, the smoothing filter is a Gaussian filter with threshold. As a result of this, in this process, it is possible to improve the measurement accuracy of the thickness or the basis weight by performing smoothing using the Gaussian filter with threshold.

5-9. Ninth effect

As a ninth effect, in the process according to the embodiment described above, the detection device 20 is installed in the coating line for coating the measurement object, and detects the thickness or the basis weight of the measurement object at each detection position by using the transmittance intensity that has been acquired by irradiating the measurement object with β-rays, X-rays, or infrared light. As a result of this, in this process, it is possible to improve the measurement accuracy of the thickness or the basis weight in the coating line.

6. System

The flow of the processes, the control procedures, the specific names, and the information containing various kinds of data or parameters indicated in the above specification and drawings can be arbitrarily changed unless otherwise stated.

Furthermore, the components of each unit illustrated in the drawings are only for conceptually illustrating the functions thereof and are not always physically configured as illustrated in the drawings. In other words, the specific shape of a separate or integrated device is not limited to the drawings. Specifically, all or part of the device can be configured by functionally or physically separating or integrating any of the units depending on various loads or use conditions.

Furthermore, all or any part of each of the processing functions performed by each of the devices can be implemented by a CPU and by programs analyzed and executed by the CPU or implemented as hardware by wired logic.

7. Hardware

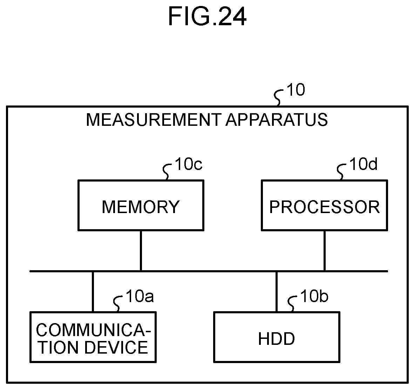

In the following, an example of a hardware configuration of the measurement apparatus 10 will be described. Moreover, the other devices may also have a similar hardware configuration. FIG. 24 is a diagram illustrating an example of a hardware configuration according to the embodiment. As illustrated in FIG. 24, the measurement apparatus 10 includes a communication device 10a, a hard disk drive (HDD) 10b, a memory 10c, and a processor 10d. Furthermore, each of the units illustrated in FIG. 17 is connected by a bus or the like with each other.

The communication device 10a is a network interface card or the like, and performs communication with another server. The HDD 10b stores therein a database and a program that causes the functions illustrated in FIG. 6 to operate.

The processor 10d operates the process that executes each of the functions described above in FIG. 6 or the like by reading the program that executes the same processes as those performed by each of the processing units illustrated in FIG. 6 from the HDD 10b or the like and loading the read program in the memory 10c. For example, the process executes the same functions as those performed by each of the processing units included in the measurement apparatus 10. Specifically, the processor 10d reads, from the HDD 10b or the like, the program having the same functions as those performed by the collection unit 15a, the first smoothing unit 15b, the second smoothing unit 15c, and the like. Then, executes the same processes as those performed by the collection unit 15a, the first smoothing unit 15b, the second smoothing unit 15c, and the like.

In this way, the measurement apparatus 10 operates as a device that executes various processing methods by reading and executing the program. Furthermore, the measurement apparatus 10 is also able to implement the same functions as those described above in the embodiment by reading the above described program from a recording medium by a medium reading device and executing the read program. In addition, the program described above need not always be executed by the measurement apparatus 10. For example, the present invention may also be similarly applied to a case in which another computer or another server executes the program or in a case in which another computer and another server cooperatively execute the program with each other.

The program may be distributed via a network, such as the Internet. Furthermore, the program may be executed by being recorded in a computer readable medium, such as a hard disk, a flexible disk (FD), a CD-ROM, a magneto-optical disk (MO), or a digital versatile disk (DVD), and being read from the recording medium by the computer.

According to the present invention, an advantage is provided in that it is possible to improve measurement accuracy of a thickness or a basis weight.

**Claims**

**1.** A measurement apparatus (10) comprising:

a collection unit (15a) that collects, from a detection device (20), a detection profile including a plurality of detection values related to a thickness or a basis weight of a measurement object (S) that is to be conveyed and that is in a form of a sheet; and

**EP 4 657 017 A1**

a first smoothing unit (15b) that performs smoothing, by using a predetermined filter, on the plurality of detection values included in the detection profile in a width direction that is perpendicular to a conveyance direction of the measurement object, and that outputs a first smoothing profile.

2. The measurement apparatus (10) according to claim 1, further comprising a second smoothing unit (15c) that performs smoothing, in the conveyance direction by using the predetermined filter, on the plurality of detection values that are included in the first smoothing profile and that have been subjected to the smoothing in the width direction, and that outputs a second smoothing profile.

3. The measurement apparatus (10) according to claim 1 or 2, wherein the predetermined filter is a moving average filter.

4. The measurement apparatus (10) according to any of claims 1 to 3, wherein the predetermined filter is a median filter.

5. The measurement apparatus (10) according to any of claims 1 to 4, wherein the predetermined filter is a Gaussian filter.

6. The measurement apparatus (10) according to any of claims 1 to 5, wherein the predetermined filter is a moving average filter with threshold.

7. The measurement apparatus (10) according to any of claims 1 to 6, wherein the predetermined filter is a median filter with threshold.

8. The measurement apparatus (10) according to any of claims 1 to 7, wherein the predetermined filter is a Gaussian filter with threshold.

9. The measurement apparatus (10) according to any of claims 1 to 8, wherein the detection device (20) is installed in a coating line for coating the measurement object (S), and calculates the thickness or the basis weight of the measurement object at each detection position by using a transmittance intensity that has been detected by irradiating the measurement object with $\beta$-rays, X-rays, or infrared light.

10. A measurement method that causes a computer (10) to execute a process comprising:

collecting, from a detection device (20), a detection profile including a plurality of detection values related to a thickness or a basis weight of a measurement object (S) that is to be conveyed and that is in a form of a sheet; and performing smoothing, by using a predetermined filter, on the plurality of detection values included in the detection profile in a width direction that is perpendicular to a conveyance direction of the measurement object, and outputting a first smoothing profile.

11. A measurement program that causes a computer (10) to execute a process comprising:

collecting, from a detection device (20), a detection profile including a plurality of detection values related to a thickness or a basis weight of a measurement object (S) that is to be conveyed and that is in a form of a sheet; and performing smoothing, by using a predetermined filter, on the plurality of detection values included in the detection profile in a width direction that is perpendicular to a conveyance direction of the measurement object, and outputting a first smoothing profile.

# FIG.1

(2) ACQUIRE DETECTION PROFILE

(5) PERFORM SMOOTHING IN MD DIRECTION

(4) PERFORM SMOOTHING IN CD DIRECTION

100

CD DIRECTION

S

ELECTRODE SHEET

MD DIRECTION

(1) CONVEY SHEET

DETECTION DEVICE — 20

20-1

20-2

(3) COLLECT DETECTION PROFILE

10

MEASUREMENT APPARATUS

W

WORKER

EP 4 657 017 A1

# FIG.2

21

FRAME UNIT

23

UPPER
PART
SENSOR
UNIT

22U

22

22D

SENSOR UNIT

22U

LOWER
PART
SENSOR
UNIT

CONTROL UNIT

20
DETECTION DEVICE

# FIG.3

FLOW DIRECTION OF ELECTRODE SHEET

EP 4 657 017 A1

FIG.4

EP 4 657 017 A1

# FIG.5

(1)

MD (FLOW) DIRECTION

FLOW DIRECTION OF
ELECTRODE SHEET

CD (WIDTH) DIRECTION

(2)

MD DETECTION POSITION

$X_1$
$X_2$
$X_3$

$X_{n-1}$

$X_n$

FLOW DIRECTION OF
ELECTRODE SHEET

$Y_1$  $Y_2$  $Y_3$  ...  $Y_{m-1}$  $Y_m$

CD DETECTION POSITION

EP 4 657 017 A1

# FIG.6

100

MEASUREMENT APPARATUS ~10

DETECTION DEVICE ~20

FRAME UNIT ~21

SENSOR UNIT ~22

CONTROL UNIT ~23

N

INPUT UNIT ~11

OUTPUT UNIT ~12

COMMUNICA-TION UNIT ~13

CONTROL UNIT ~15

COLLECTION UNIT ~15a

FIRST SMOOTHING UNIT ~15b

SECOND SMOOTHING UNIT ~15c

STORAGE UNIT ~14

DETECTION RESULT STORAGE UNIT ~14a

FIRST SMOOTHING RESULT STORAGE UNIT ~14b

SECOND SMOOTHING RESULT STORAGE UNIT ~14c

# FIG.7

14a

| PRODUCTION LINE | DETECTION DEVICE | DETECTION PROFILE |
|---|---|---|
| COATING LINE #1 | DETECTION DEVICE #1 | DETECTION PROFILE #1 |
| | | DETECTION PROFILE #2 |
| | | DETECTION PROFILE #3 |
| | | ... |
| | | DETECTION PROFILE #n-1 |
| | | DETECTION PROFILE #n |

# FIG.8

14b

| PRODUCTION LINE | DETECTION DEVICE | FIRST SMOOTHING PROFILE |
|---|---|---|
| COATING LINE #1 | DETECTION DEVICE #1 | CD SMOOTHING PROFILE #1 |
| | | CD SMOOTHING PROFILE #2 |
| | | CD SMOOTHING PROFILE #3 |
| | | ... |
| | | CD SMOOTHING PROFILE #n-1 |
| | | CD SMOOTHING PROFILE #n |

# FIG.9

14c

| PRODUCTION LINE | DETECTION DEVICE | SECOND SMOOTHING PROFILE |
|---|---|---|
| COATING LINE #1 | DETECTION DEVICE #1 | MD SMOOTHING PROFILE #1 |
| | | MD SMOOTHING PROFILE #2 |
| | | MD SMOOTHING PROFILE #3 |
| | | ... |
| | | MD SMOOTHING PROFILE #n-1 |
| | | MD SMOOTHING PROFILE #n |

# FIG.10

RIDGE LINE PORTION

BASIS WEIGHT [g/m²] vs DETECTION POSITION [mm]

# FIG.11

| ALGORITHM | NULL (DETECTION PROFILE) | GAUSSIAN FILTER WITH THRESHOLD | | MOVING AVERAGE FILTER WITH THRESHOLD | | MEDIAN FILTER WITH THRESHOLD | |
|---|---|---|---|---|---|---|---|
| COMPUTA-TIONAL WIDTH | - | 15 | | 15 | | 15 | |
| DISTRI-BUTION | - | 1.0 | 2.0 | - | - | - | - |
| THRESHOLD | - | 1.0 | 2.0 | 1.0 | 2.0 | 1.0 | 2.0 |
| $\sigma$ | 0.65 | **0.59** | **0.55** | **0.49** | **0.41** | **0.51** | **0.45** |
| R | 3.00 | **2.65** | **2.38** | **2.04** | **1.56** | **2.10** | **1.60** |

EP 4 657 017 A1

FIG.12

EP 4 657 017 A1

# FIG.13

EP 4 657 017 A1

FIG.14

EP 4 657 017 A1

## FIG.15

EP 4 657 017 A1

FIG.16

# FIG.17

EP 4 657 017 A1

FIG.18

EP 4 657 017 A1

# FIG.19

EP 4 657 017 A1

# FIG.20

```
        ┌─────────────┐
        │    START    │
        └─────────────┘
              │
              ▼
  ┌─────────────────────────┐
  │║ DETECTION RESULT      ║│ ～S101
  │║ MANAGEMENT PROCESS    ║│
  └─────────────────────────┘
              │
              ▼
  ┌─────────────────────────┐
  │║ FIRST SMOOTHING RESULT║│ ～S102
  │║ MANAGEMENT PROCESS    ║│
  └─────────────────────────┘
              │
              ▼
  ┌─────────────────────────┐
  │║ SECOND SMOOTHING RESULT║│ ～S103
  │║ MANAGEMENT PROCESS    ║│
  └─────────────────────────┘
              │
              ▼
        ┌─────────────┐
        │     END     │
        └─────────────┘
```

# FIG.21

```
        ┌─────────────┐
        │    START    │
        └─────────────┘
              │
              ▼
  ┌─────────────────────────┐
  │ SHEET CONVEYANCE PROCESS│ ～S201
  └─────────────────────────┘
              │
              ▼
  ┌─────────────────────────┐
  │ DETECTION PROFILE       │ ～S202
  │ ACQUISITION PROCESS     │
  └─────────────────────────┘
              │
              ▼
  ┌─────────────────────────┐
  │ DETECTION PROFILE       │ ～S203
  │ COLLECTION PROCESS      │
  └─────────────────────────┘
              │
              ▼
  ┌─────────────────────────┐
  │ DETECTION PROFILE       │ ～S204
  │ STORAGE PROCESS         │
  └─────────────────────────┘
              │
              ▼
        ┌─────────────┐
        │     END     │
        └─────────────┘
```

## FIG.22

START

DETECTION PROFILE REFERENCE PROCESS ~S301

CD SMOOTHING PROCESS ~S302

CD SMOOTHING PROFILE STORAGE PROCESS ~S303

END

## FIG.23

START

CD SMOOTHING PROFILE REFERENCE PROCESS ~S401

MD SMOOTHING PROCESS ~S402

MD SMOOTHING PROFILE STORAGE PROCESS ~S403

END

FIG.24

# EUROPEAN SEARCH REPORT

Application Number

EP 25 17 8815

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 4 928 257 A (YERKES JAMES E [US] ET AL) 22 May 1990 (1990-05-22) | 1-8,10, 11 | INV. G01B15/02 |
| Y | * column 2, line 44 - column 5, line 11; claims 1, 11 * | 9 | |
| Y | WO 2017/051579 A1 (SCREEN HOLDINGS CO LTD [JP]; UNIV OSAKA [JP]) 30 March 2017 (2017-03-30) * claims 1, 7 * | 9 | |
| Y | CN 217 637 249 U (CHUNENG NEW ENERGY CO LTD) 21 October 2022 (2022-10-21) * claim 1 * | 9 | |

TECHNICAL FIELDS SEARCHED (IPC)

G01B

The present search report has been drawn up for all claims

| Place of search | Date of completion of the search | Examiner |
|---|---|---|
| Munich | 3 September 2025 | Malcoci, Andrei |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

**EP 25 17 8815**

This annex lists the patent family members relating to the patent documents cited in the above-mentioned European search report.
The members are as contained in the European Patent Office EDP file on
The European Patent Office is in no way liable for these particulars which are merely given for the purpose of information.

**03-09-2025**

| Patent document cited in search report | | Publication date | Patent family member(s) | | Publication date |
|---|---|---|---|---|---|
| US 4928257 | A | 22-05-1990 | NONE | | |
| WO 2017051579 | A1 | 30-03-2017 | CN | 108027236 A | 11-05-2018 |
| | | | JP | 6589239 B2 | 16-10-2019 |
| | | | JP | 2017062201 A | 30-03-2017 |
| | | | KR | 20180040636 A | 20-04-2018 |
| | | | WO | 2017051579 A1 | 30-03-2017 |
| CN 217637249 | U | 21-10-2022 | NONE | | |

EPO FORM P0459

For more details about this annex : see Official Journal of the European Patent Office, No. 12/82

**EP 4 657 017 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2022048808 A